# EUROPEAN PATENT APPLICATION

(11) **EP 1 245 264 A1**
(43) Date of publication of application: **02.10.2002**
(21) Application number: 00956839.5
(22) Date of filing: 31.08.2000
(51) Int. Cl.: B01D 46/30

(54) **EXHAUST GAS DUST COLLECTING DEVICE**

(30) Priority: 02.11.1999 JP 31252299; 02.11.1999 JP 31252399; 02.11.1999 JP 31252499; 12.07.2000 JP 2000210716
(71) Applicant: NKK CORPORATION, Tokyo 100-0005 (JP)
(72) Inventor: ISOZAKI, Shinichi, NKK Corporation, Tokyo 100-0005 (JP); FURUKAWA, Takeshi, NKK Corporation, Tokyo 100-0005 (JP); TADA, Mitsuhiro, NKK Corporation, Tokyo 100-0005 (JP); AKIYAMA, Hajime, NKK Corporation, Tokyo 100-0005 (JP); ISHIZEKI, Koji, NKK Corporation, Tokyo 100-0005 (JP)
(74) Representative: HOFFMANN - EITLE
(86) International application number: JP0005915
(87) International publication number: WO01032293

(57) **Abstract**

The compact design of apparatus for collecting an exhaust gas dust has packed bed(s) of solid particles as the filtration medium. The apparatus keeps high dust collection efficiency with small pressure drop. An exhaust gas which contains dust is introduced to the filtration medium to remove the dust therefrom. The apparatus has an exhaust gas duct for collecting dust, a support plate located at a inclined angle against the exhaust gas flow direction to allow the exhaust gas pass through, and a thin packed bed of solid particles as the filtration medium formed on the support plate while creating free surface at top of the bed.

## Description

### Field of the invention

The present invention relates to an apparatus for collecting an exhaust gas dust to remove dust contained in exhaust gas discharged from blast furnace, direct reduction furnace, smelting reduction furnace, sintering machine, electrolysis furnace, incineration furnace, combustion furnace, and the like, and specifically relates to an apparatus for collecting an exhaust gas dust, in which solid particles as the filtration medium are packed.

### Background of the invention

Conventional technology includes an apparatus for collecting an exhaust gas dust disclosed in JP-A-57-126908, (the term "JP-A" referred herein signifies the "unexamined Japanese patent publication"). The technology disclosed therein is a method for treating converter exhaust gas, containing the steps of: reducing the temperature of exhaust gas emitted from a converter; letting the exhaust gas pass through a plurality of packed beds which are arranged along the exhaust gas passage and which are filled with iron ore or iron ore pellets as the packing material to remove dust from the exhaust gas, thus conducting the dust collection from non-combustion type converter; and, at the same time, heating the iron ore or the pellets of iron ore as the packing material to conduct reduction thereof.

The disclosed method, however, induces pressure drop across the packed bed of the solid particles. Furthermore, the collected dust accumulates in the packed bed, which further increases the pressure drop. As a result, the method requires using a booster for compensating the generated pressure drop.

In addition, the above-described conventional dust collecting device for high temperature exhaust gas needs to increase the thickness of the packed bed to a significant degree particularly when the dust collection efficiency is to be sustained at a high level, which results not only in increased scale of the dust collecting device but also in increased size of the booster, thus increasing the operating cost of the booster.

Another example of the conventional technology is disclosed in JP-A-9-202887. The disclosure includes a coal gasification method and an apparatus therefor. According to the disclosure, molten slag which is generated in a coal gasification furnace and which is emitted into the exhaust gas is cooled to solidify, then is removed from the exhaust gas, while converting the separated molten slag into useful CO and H₂ using H₂O in the exhaust gas as the fuel. To attain the object, the disclosed apparatus adopts a shaft furnace packed with a carbon material such as coke located after the coal gasification furnace, thus conducting the reaction between the gas discharged from the gasification furnace and C such as coke to conduct temperature reduction of the gas and change of gas composition. Furthermore, by capturing the molten slag and char in the exhaust gas onto coke or the like, the yield of CO and H₂ effective as the fuel is increased, while performing the collection of molten slag and char.

When the conventional technology disclosed in JP-A-9-202887 is applied to a conventional high temperature gas dust collecting device packed with solid particles as the filtration medium, the gas space velocity may be increased to sustain high dust collection efficiency. If the gas space velocity is increased, however, the filtration particles forming the packed bed become fluidize, which gives bad influence on the dust collection performance to degrade the dust collection efficiency. As a result, the gas space velocity has an upper limit, which is a drawback on realizing favorable dust collection efficiency.

Alternatively, the diameter of packed bed may be increased to improve the dust collection efficiency. The countermeasure, however, raises an economical problem.

To solve the above-described problems, the inventors of the present invention conducted studies on the dust collection function of a high temperature apparatus for collecting an exhaust gas dust having a packed bed filled with solid particles as the filtration medium, and revealed the following-given findings.
(1) The dust in exhaust gas is separated therefrom by inertial collision against the filtration medium.
(2) The dust accumulation is concentrated on the packed bed portion directly beneath a boundary plane between the exhaust gas and the packed bed, where the frequency of inertial collisions of the dust in exhaust gas against the filtration medium discontinuously increases.
(3) The dust separated from the exhaust gas stream accumulates to a place in the packed bed nearly separated from the exhaust gas stream.
(4) After the dust accumulated in the packed bed becomes a certain quantity, the dust scatters toward downstream side carried by the exhaust gas stream, (the dust accumulated in the upstream portion of the packed bed scatters to downstream side of the packed bed, and the dust accumulated to the most downstream portion in the packed bed scatters outside thereof.)
(5) Since the quantity of emitted dust increases with the increase in the accumulated quantity of the dust, the quantity of accumulated dust in the packed bed per unit volume thereof has a saturation level.
(6) The saturation quantity of accumulated dust, which is accumulated concentrating on a packed bed portion directly beneath the boundary plane, between the flue as and the packed bed, where the frequency of inertial collisions of the dust in exhaust gas against the filtration medium discontinuously increases, per unit volume of the packed bed is larger than the saturated value of accumulated quantity of dust at portions of the packed bed except for the portion directly beneath the boundary plane, per unit volume of the packed bed.
   Furthermore, the inventors of the present invention carried out a study on the behavior of solid particles in packed bed, and derived the findings described below.
(7) When solid particles are loaded on a inclined support plate to form a packed bed having free surface at top thereof, and when discharge and charge of the solid particles are repeated, the moving speed of the solid particles in the packed bed at the moment of discharge and charge thereof is faster, (or the residence time is shorter), at near the top of the packed bed than at near the bottom of thereof.
(8) The ratio of moving speed of solid particles at near the top of the packed bed to the moving speed thereof at near the bottom of the packed bed becomes maximum, when the inclined angle of the support plate is brought from the angle lower by 10 degrees than the dynamic angle of repose of the solid particles to the angle higher by 10 degrees than the static angle of repose thereof. (Hereinafter, the static angle of repose is defined as the critical angle where the solid particles begin to slide along the inclined angle plane when the inclined angle of the support plate is slowly increased while sustaining the state of stationary solid particles. The dynamic angle of repose is defined as the critical angle where the flowing solid particles begin to stop flowing when the inclined angle of the support plate is slowly decreased.)
   The inventors of the present invention further conducted studies, and found the followings.
(9) The mechanism of dust collection in the packed bed is presumably governed by inertial collision. Accordingly, when the gas flow speed increases, the dust particles are likely separated from the gas flow stream owing to the inertial force, thus increasing the opportunities to contact thereof with the filtration medium. As a result, the dust collection efficiency increases.
(10) When, however, the gas flow speed increased, the kinetic energy of the dust particles also increases, so the dust particles rebound on the surface of the filtration medium. In addition, the kinetic energy of the gas flow stream induces frequent re-emissions of dust that has already been attached to the filtration medium. Consequently, the dust collection efficiency decreases.
(11) As a result, to maximize the dust collection efficiency, the flow speed of the gas should be set to the maximum value sustaining the balance between the effect of inertial collision and the effect of re-emissions of solid particles, or the gas flow speed should be set to the incipient fluidization velocity of the solid particles at the maximum.

There are issues to be solved by the present invention as described below.

Chlorides (CaCl₂, NaCl, KCl, PbCl₂, or the like) in the exhaust gas are requested to be removed at as high temperature as possible in view of prevention of dioxin generation. Since the chlorides likely adhere to boiler tubes and induce corrosion thereof, they are necessarily collected at upstream side from the boiler. When the chlorides are removed from the exhaust gas using conventional technologies, the internal temperature of the filter bed is requested to be regulated to not higher than the solidification point of the chlorides. In that case, slag components such as SiO₂ and Al₂O₃, and the filter bed, as well as the chlorides capture valuable metals such as FeO and ZnO, so the problems described below arise.

Since conventional technologies conduct collection of valuable metals and slag components and the collection of chlorides in a single filter bed, the pressure drop across the filter bed likely increases. Therefore, to regulate the pressure drop across the filter bed to not higher than a specified level, large quantity of the solid particles is requested to be discharged. To separate the once-collected dust from the filtration particles, a separator having large treatment capacity is necessary, and the consumption of filtration particles increases, which is uneconomical.

As described above, the separation of dust from the filtration particles that captured valuable metals and slag components is economically disadvantageous. To this point, there is an alternative method in which the filtration particles are charged to a reaction furnace without preliminarily separating dust therefrom to recover the valuable metals. When the filtration particles are coke particles, they have an advantage of utilizable as a reducing agent of metals in the furnace. Since, however, the chlorides in the dust are also charged to the furnace, the quantity of chlorides in the exhaust gas increases to induce troubles of facilities, such as clogging the exhaust gas system, in some cases.

To solve those problems, the inventors of the present invention conducted studies on the influence of dust components in exhaust gas on the ambient temperature to establish a high temperature apparatus for collecting an exhaust gas dust that makes it possible to remove and to collect separately the chloride components and other dust components, and then, the inventors of the present invention derived the findings given below.

The chlorides in dust are in gaseous state at high temperatures, and are in molten state at 800°C or below, further are in solid state at 500°C or below.

Other metallic components and slag components stay in solid state at 1,100°C or below.

Based on the findings described above, the preferred embodiment for carrying out the present invention has constitutions, which are given below.
(1) A high temperature apparatus for collecting an exhaust gas dust, according to an embodiment of the preferred embodiment, is to provide with plurality stages of filter beds packed with solid particles as the filtration medium, the internal temperature of the filter beds being varied responding to the target material to be collected. According to the embodiment, the internal temperature of individual filter beds is varied responding to the target material being collected at the filter bed concerned. For example, the first filter bed collects metallic and slag components in their molten state or solid state. The second filter bed cools chloride components, which were in gas phase in the first filter bed to bring the chloride components to their molten state or solid state, thus collecting the dust components. In this manner, the dust components are collected through the plurality of filter beds in multiple stage operation, so the chloride components and other dust components are separately collected and recovered. Furthermore, the embodiment increases the dust collection efficiency owing to the plurality of filter bed in multiple stage operation, (in detail, refer to examples given later). The term "molten state" referred in the embodiment signifies the state of (melt + solid), which differs from the gas state (gas + melt).
(2) A high temperature apparatus for collecting an exhaust gas dust according to another embodiment of the preferred embodiment is the dust collecting device of (1) provided further with a cooling means to cool the internal zone of filter bed to separate and recover individual gas components, each having different boiling temperatures, at different filter beds. According to the embodiment, the cooling means cools the internal zone of the filter bed to separate and recover the exhaust gas components having different boiling points to each other.
(3) A high temperature apparatus for collecting an exhaust gas dust according to further embodiment of the preferred embodiment is the dust-collecting device of (1) or (2), in which the first filter bed collects metallic and slag components. According to the embodiment, the first filter bed collects the metallic and slag components existing in molten state or in solid state in the exhaust gas.
(4) A high temperature apparatus for collecting an exhaust gas dust according to still another embodiment of the preferred embodiments is the dust-collecting device of (3), in which the second filter bed collects chlorides. According to the embodiment, the second filter bed cools the chlorides that passed through the first filter bed to bring the chlorides to their molten state or solid stage to collect thereat.
(5) A high temperature apparatus for collecting an exhaust gas dust according to still further embodiment of the preferred embodiments is the dust collecting device of (4), in which the cooling means cools the internal zone of the second filter bed to a range of from 800°C to 350°C. According to the embodiment, the second filter bed cools the chlorides that passed the first filter bed to a temperature range of from 800°C to 350°C, thus bringing the chlorides to their molten state or solid state to collect thereat.

An object of the present invention is, based on the above-described results of studies, to provide an apparatus to collect dust from high temperature exhaust gas by packing solid particles as the filtration medium in a packed bed to sustain high dust collection efficiency with a compact facility and with a small pressure drop across the apparatus.

### Summary of the invention

To attain the above-given object, the present invention discloses the following.

First, the apparatus for collecting an exhaust gas dust contains: an exhaust gas duct through which an exhaust gas containing dust flows in one direction, upstream side to downstream side; at least one support plate located in the exhaust gas duct, being positioned at an inclined angle against the flow of the exhaust gas, and allowing the exhaust gas passing therethrough; and a packed bed of filtration particles located on the support plate, having a upper surface as a free surface.

Secondly, the apparatus for collecting an exhaust gas dust contains: an exhaust gas duct through which an exhaust gas containing dust flows in one direction, upstream side to downstream side; at least two support plates located in the exhaust gas duct with a space between one plate and the other plate, being located at a inclined angle against the flow of the exhaust gas, and allowing the exhaust gas passing therethrough; and a packed bed of filtration particles located on the support plate, having a upper surface as a free surface.

Thirdly, the apparatus for collecting an exhaust gas dust contains: a furnace filled with filtration particles having a particle-packed bed formed by packing filtration particles in the furnace; a partition plate located in the furnace filled with filtration particles, contacting with the top of the particle-packed bed, and allowing the exhaust gas passing therethrough; an exhaust gas duct allowing the exhaust gas containing dust passing therethrough, and the exhaust gas discharge end of the exhaust gas duct being connected to a lower side section of the furnace filled with filtration particles; and a clean gas duct allowing the clean gas after removed dust from the exhaust gas to pass therethrough, and the inlet end of the clean gas duct being connected to an upper side section of the furnace filled with filtration particles.

Fourthly, the apparatus for collecting an exhaust gas dust contains: a furnace filled with filtration particles having a particle-packed bed formed by packing filtration particles in the furnace, and having a diameter at upper section thereof larger than a diameter at lower section thereof; an exhaust gas duct allowing the exhaust gas containing dust passing therethrough, and the exhaust gas discharge end of the exhaust gas duct being connected to a lower side section of the furnace filled with filtration particles; and a clean gas duct allowing the clean gas after removed dust from the exhaust gas to pass therethrough, and the inlet end of the clean gas duct being connected to an upper side section of the furnace filled with filtration particles.

Fifthly, the apparatus for collecting an exhaust gas dust contains: an exhaust gas duct through which the exhaust gas containing dust flows; a support plate supporting a filtration medium and allowing the exhaust gas passing therethrough; a plurality of packed beds packed with the filtration medium, positioned on respective support plates or positioned between respective support plates, which plurality of packed beds have a plurality of respective interfaces where the frequency of inertial collisions of dust in the exhaust gas against the filtration medium discontinuously increases; and a plurality of spaces existing before respective packed beds and between respective pair of packed beds.

### Brief description of the drawing

Fig. 1 shows a schematic cross sectional view of a high temperature apparatus for collecting an exhaust gas dust according to the embodiment 1 of the preferred embodiment 1 of the present invention.
Fig. 2 shows a schematic cross sectional view of a high temperature apparatus for collecting an exhaust gas dust according to the embodiment 2 of the preferred embodiment 1 of the present invention.
Fig. 3 shows a schematic cross sectional view of a high temperature apparatus for collecting an exhaust gas dust according to the embodiment 3 of the preferred embodiment 1 of the present invention.
Fig. 4 shows a schematic cross sectional view of a high temperature apparatus for collecting an exhaust gas dust according to the embodiment 1 of the preferred embodiment 2 of the present invention.
Fig. 5 is a graph showing the variations of dust collection efficiency with the gas space velocity in a particle-packed bed according to the preferred embodiment 2 of the present invention.
Fig. 6 shows a schematic cross sectional view of a high temperature apparatus for collecting an exhaust gas dust according to the embodiment 2 of the preferred embodiment 2 of the present invention.
Fig. 7 shows a schematic cross sectional view of a high temperature apparatus for collecting an exhaust gas dust according to the embodiment 1 of the preferred embodiment 3 of the present invention.
Fig. 8 shows a schematic cross sectional view of a high temperature apparatus for collecting an exhaust gas dust according to the embodiment 2 of the preferred embodiment 3 of the present invention.
Fig. 9 shows a schematic cross sectional view of a high temperature apparatus for collecting an exhaust gas dust according to the embodiment 3 of the preferred embodiment 3 of the present invention.
Fig. 10 shows a schematic cross sectional view of a high temperature apparatus for collecting an exhaust gas dust according to the embodiment 4 of the preferred embodiment 3 of the present invention.
Fig. 11 shows a schematic cross sectional view of a high temperature apparatus for collecting an exhaust gas dust according to the preferred embodiment 4 of the present invention.

### PREFERRED EMBODIMENT FOR CARRYING OUT THE INVENTION

### PREFERRED EMBODIMENT 1

### EMBODIMENT 1 (according to the PREFERRED EMBODIMENT 1)

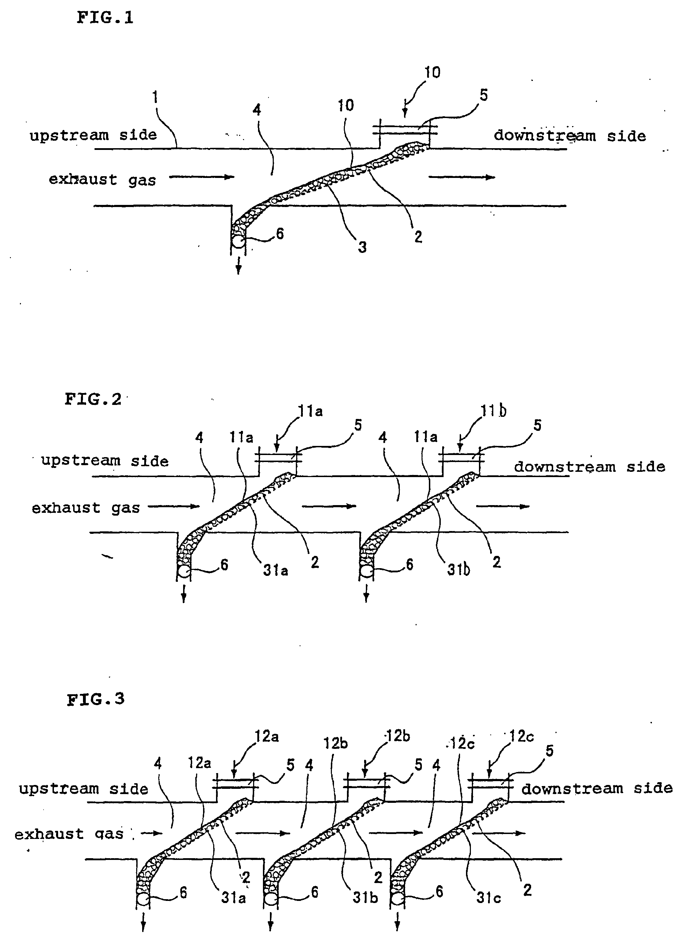

Fig. 1 shows a schematic cross sectional view of a high temperature apparatus for collecting an exhaust gas dust according to the EMBODIMENT 1 of the PREFERRED EMBODIMENT 1. The reference number 1 designates an exhaust gas duct for collecting dust, through which high temperature exhaust gas containing dust flows, and the reference number 2 designates a support plate which is located in the exhaust gas duct 1 for collecting dust, is inclined against the exhaust gas flow direction, and is made of a perforated plate, each perforation having smaller opening than the filtration particle size.

The support plate 2 is positioned facing the bottom end thereof to upstream side of the direction of exhaust gas flow, and the top end thereof to downstream side of the direction of exhaust gas flow. The support plate 2 supports solid particles 10 as the filtration medium, (hereinafter the solid particles as the filtration medium are referred to as the filtration particles 10). The solid particles 10 form a thin packed bed 3, which creates a free, surface at top thereof. The reference number 4 designates a space at upstream side of the support plate 2 in the dust-collecting exhaust gas duct 1. The reference number 5 designates a filtration particles charge unit which is located above the upper end of the support plate 2 in the dust-collecting exhaust gas duct 1, and which feeds the filtration particles 10 onto the support plate 2. The reference number 6 designates a filtration particles discharge unit which is located beneath the bottom end of the support plate 2 in the dust-collecting exhaust gas duct 1, and which discharges the filtration particles 10 on the support plate 2 to outside the duct.

The operation of the apparatus for collecting an exhaust gas dust according to the EMBODIMENT 1 of the PREFERRED EMBODIMENT 1 is described below.

The high temperature exhaust gas that flows through the dust-collecting exhaust gas duct 1 from upstream side to downstream side passes through the space 4, and enters the packed bed 3, which is formed on the air-passable support plate 2 inclined against the direction of exhaust gas flow and being located in the dust-collecting exhaust gas duct 1, from the free surface of the thin packed bed 3. Then, the exhaust gas passes through the packed bed 3 to leave the air-passable support plate 2.

Through the course of the flow of high temperature exhaust gas, the dust in the exhaust gas does not collide with the filtration medium. Accordingly, the frequency of inertial collisions of the dust in the exhaust gas against the filtration medium of the packed bed 3 suddenly increases when the exhaust gas enters the thin packed bed 3 from the free surface side after passing the space 4.

That is, the boundary plane between the space 4 and the thin packed bed 3, (corresponding to the free surface), is the interface where the frequency of inertial collisions of the dust in exhaust gas against the filtration medium discontinuously increases. Consequently, the dust in the exhaust gas is separated from the gas flow stream and is heavily accumulated at the portion in the packed bed 3 directly beneath the boundary plane.

After the dust accumulated at the portion in the packed bed 3 directly beneath the boundary plane becomes a certain quantity, the dust scatters toward downstream side of the packed bed 3 carried by the exhaust gas stream, (the dust collection efficiency decreases). Accordingly, it is necessary to keep the quantity of dust accumulated at the portion in the packed bed directly beneath the boundary plane to a saturation level or below per unit volume of the packed bed.

To do this, first the filtration particles discharge unit 6 located at bottom end of the support plate 2 is operated to discharge the filtration particles 10 to outside the duct. At that moment, the air-passable support plate 2 is inclined against the direction of exhaust gas flow, so the packed bed 3 on the support plate 2 is also inclined. The top of the packed bed 3 becomes a free surface. Since the filtration particles having accumulated dust are heavier than the filtration particles without accumulation of dust, the filtration particles with accumulated dust at near the top face of the packed bed 3, (or at directly beneath the free surface), moves faster (or gives shorter residence time) than the filtration particles without accumulation of dust at near the bottom face of the packed bed 3, (or at directly above the support plate 2). As a result, the filtration particles 10 in the packed bed 3 at directly downstream side of the boundary plane, where the largest quantity of dust is accumulated, are preferentially discharged, thus minimizing the make up quantity of the filtration particles. In that case, unnecessary handling of the filtration particles is eliminated, and the powdering of the filtration particles is also minimized.

After the filtration particles 1 directly beneath the boundary plane, where the largest quantity of dust is accumulated in the packed bed 3, are preferentially discharged, the filtration particles charge unit 5 located above the support plate 2 is operated to charge the fresh filtration particles 10 having no accumulated dust to the packed bed 3. By the operation, quantity of dust accumulated per unit volume of the filtration particles 10 structuring the boundary plane in the packed bed 2 is kept to a saturated level or below. Thus the high dust collection efficiency is maintained.

Furthermore, since the thickness of the packed bed 3 is regulated to a thin level, the pressure drop as a high temperature apparatus for collecting an exhaust gas dust is kept to a low level.

In addition, since the support plate 2 supporting the packed bed 3 is located in the exhaust gas duct 1 for collecting dust in a inclined state, the dust-collecting apparatus can be designed in compact type compared with conventional upright packed bed design.

### EMBODIMENT 2 (according to the PREFERRED EMBODIMENT 1)

Fig. 2 shows a schematic cross sectional view of a high temperature apparatus for collecting an exhaust gas dust according to the EMBODIMENT 2 of the PREFERRED EMBODIMENT 1.

The EMBODIMENT 2 is a modification of the EMBODIMENT 1. Two of the air-passable support plates 2 inclined against the direction of exhaust gas flow, described in the EMBODIMENT 1, are positioned along the dust-collecting exhaust gas duct 1 at a certain distance from each other. The filtration particles 11a, 11b are packed to the respective support plates 2, 2 to form thin packed beds 31a and 31b giving free surface at top of the respective thin backed beds.

The space 4 is formed at upstream side of each of the support plates 2, 2. The filtration particles charge unit 5 is positioned above each of the support plates 2, 2. The filtration particles discharge unit 6 is positioned beneath each of the support plates 2, 2.

Accordingly, individual units structuring the dust collection mechanism are the same with those in the EMBODIMENT 1 except that there were prepared two sets of dust collection mechanism in series, each consisting of the support plate 2 to support the packed bed, the space 4, the filtration particles feed unit 5, and the filtration particles discharge unit 6.

The operation of the apparatus for collecting an exhaust gas dust relating to the EMBODIMENT 2 of the PREFERRED EMBODIMENT 1 is described below.

The high temperature exhaust gas which flows through the dust-collecting exhaust gas duct 1, from upstream side to downstream side, passes through the first space and enters the thin first packed bed 31a from the free surface thereof, which first packed bed 31a is formed on the first air-passable support plate 2 inclined against the direction of exhaust gas flow. After passed the first packed bed 31a, the exhaust gas enters the space 4 being sandwiched between the first support plate 2 and the second packed bed 31b on the support plate 2. Then, the exhaust gas enters the thin second packed bed 31b from the free surface thereof, which second packed bed 31b is formed on the second support plate 2. After passing through the second packed bed 31b, the exhaust gas leaves the support plate 2.

Through the course of the exhaust gas flow, the collision of dust in the exhaust gas against the filtration medium does not occur in the space 4. Consequently, the frequency of inertial collisions of the dust in the exhaust gas against the filtration medium shows sudden increase on entering the thin first packed bed 31a from the first space 4, and on entering the thin second packed bed 31b supported by the support plate 2 after passing through the space 4, which is formed between the first support plate 2 and the second packed bed 31b.

That is, each of the boundary plane between the first space 4 and the thin first packed bed 31a, (corresponding to the free surface of the first packed bed 31a), and the boundary plane between the space 4 sandwiched between the first support plate 2 and the thin second packed bed 31b, (corresponding to the free surface of the second packed bed 31b), is the interface where the frequency of inertial collisions of the dust in exhaust gas against the filtration medium discontinuously increases. As a result, the dust in the exhaust gas is separated from the gas stream and is heavily accumulated in the first packed bed 31a and the second packed bed 31b, directly beneath the respective boundary planes.

After the dust accumulated in the packed bed becomes a certain quantity, the dust scatters toward downstream side of the first packed bed 31a and the second packed bed 31b, respectively, being carried by the exhaust gas stream, (the dust collection efficiency decreases). Accordingly, it is necessary to keep the quantity of dust accumulated in the first packed bed 31a and the second packed bed 31b directly beneath the respective boundary planes to a saturation level or below per unit volume of the respective packed beds.

To do this, first the filtration particles discharge unit 6 located at bottom end of each support plate 2 is operated to discharge the filtration particles 11a in the first packed bed 31a and the second packed bed 31b to outside the duct. At that moment, the air-passable support plate 2 is inclined against the direction of exhaust gas flow, so each of the first packed bed 31a and the second packed bed 31b on each support plate 2 is also inclined. The top face of each of the packed beds 31a, 31b becomes a free surface. Since the filtration particles having accumulated dust are heavier than the filtration particles without accumulation of dust, the filtration particles with accumulated dust at near the top face of each of the packed beds 31a, 31b, (or at directly beneath the free surface), moves faster (or gives shorter residence time) than the filtration particles without accumulation of dust at near the bottom of each of the packed beds 31a, 31b, (or at directly above the support plate 2). As a result, the filtration particles in each of the packed beds 31a, 31b directly beneath the boundary plane, where the largest quantity of dust is accumulated, are preferentially discharged, thus minimizing the make up quantity of the filtration particles 11a 11b. In that case, unnecessary handling of the filtration particles is eliminated, and the powdering of the filtration particles is also minimized.

After the filtration particles 11a, 11b directly beneath the respective boundary planes, where the largest quantity of dust is accumulated in the respective packed beds 31a, 31b, are preferentially discharged, the filtration particles charge unit 5 located above each support plate 2 is operated to charge the fresh filtration particles 11a, 11b having no accumulated dust to the respective packed beds 31a, 31b. By the operation, quantity of dust accumulated per unit volume of the filtration particles 11a, 11b structuring the respective boundary planes in the packed beds 31a, 31b, is kept to a saturated level or below. Thus the high dust collection efficiency is maintained.

The EMBODIMENT 2 applies two boundary planes in series. The dust emitted from the first packed bed 31a is captured at the boundary plane between the succeeding space 4 and the second packed bed 31b. As a result, high total dust collection efficiency is attained even when the quantity of dust in the exhaust gas is large and when the volume of the exhaust gas and the quantity of dust vary.

Furthermore, since each of the packed beds 31a, 31b is thin, the pressure drop as the high temperature apparatus for collecting an exhaust gas dust is kept low.

The quantity of dust accumulated in the first packed bed 31a and that in the second packed bed 31b differ to each other owing to the conditions such as particle size distribution of the dust. Therefore, it is preferable that the residence time of the filtration particles 11a, 11b in the respective packed beds 31a, 31b, is separately adjustable.

### EMBODIMENT 3 (according to the PREFERRED EMBODIMENT 1)

Fig. 3 shows a schematic cross sectional view of a high temperature apparatus for collecting an exhaust gas dust according to the EMBODIMENT 3 of the PREFERRED EMBODIMENT 1.

The EMBODIMENT 3 is a modification of the EMBODIMENT 2. Three air-passable support plates 2 inclined against the direction of exhaust gas flow, described in the EMBODIMENT 2, are positioned along the dust-collecting exhaust gas duct 1 at a certain distance to each other. The filtration particles 12a, 12b, 12c are loaded on the respective support plates 2, 2, 2 to form thin packed beds 31a, 31b, 31c giving free surface at top face of the respective thin beds.

The space 4 is formed at upstream side of each of the support plates 2, 2, 2. The filtration particles charge unit 5 is positioned above each of the support plates 2, 2, and 2. The filtration particles discharge unit 6 is positioned beneath each of the support plates 2, 2, and 2.

Accordingly, individual units structuring the dust collection mechanism are the same with those in the EMBODIMENT 2 except that there are prepared three sets of dust collection mechanism in series, consisting of the support plate 2 to support the packed bed, the space 4, the filtration particles charge unit 5, and the filtration particles discharge unit 6.

According to the EMBODIMENT 3, the particle size of the filtration particles 12a, 12b, 12c in respective packed beds 31a, 31b, 31c becomes smaller in that order of packed beds, (from the upstream side of the exhaust gas flow to the downstream side thereof). Consequently, the increasing rate of the frequency of inertial collisions on letting the exhaust gas pass through respective boundary planes of packed beds 31a, 31b, 31c increases along the flow of exhaust gas stream.

Therefore, a downstream side packed bed (31b against 31a, and 31c against 31b) collects finer dust than upstream side packed bed. Thus, the configuration according to the EMBODIMENT 3 is particularly effective to the dust having a wide size distribution.

In addition, since the thickness of the packed beds 31a, 31b, 31c is small, the pressure drop as a high temperature apparatus for collecting an exhaust gas dust is kept to low level.

Similar with the EMBODIMENT 2, when the quantity of dust accumulated in each of the packed beds 31a, 31b, 31c becomes a certain level, the filtration particles discharge unit 6 located at beneath the bottom end of each support plate 2 is operated to discharge the filtration particles 12a, 12b, 12c from respective packed beds 31a, 31b, 31c to outside the duct. At that moment, the filtration particles 12a, 12b, 12c which accumulate largest quantity of dust in the portion of respective packed beds 31a, 32a, 31c located directly beneath the respective boundary planes are able to be preferentially discharged, which minimizes the make up of the fresh filtration particles 12a, 12b, 12c. In that case, unnecessary handling of the filtration particles is eliminated, and the powdering of the filtration particles is also minimized.

Next, each filtration particles feed unit 4 located above each support plate 2 is operated to charge fresh filtration particles 11a, 11b, 11c containing no accumulated dust to the packed beds 31a, 31b, 31c, respectively, at an adequate charge rate. By the operation, quantity of dust accumulated at a portion directly beneath the boundary plane in the respective packed beds 31a, 31b, 31c per unit volume of the filtration particles 12a, 12b, 12c is kept to a saturated level or below. Thus the high dust collection efficiency is maintained.

The quantity of dust accumulated in these packed beds 31a, 31b, 31c differs to each other owing to the conditions such as particle size distribution of the dust. Therefore, it is preferable that the residence time of the filtration particles 12a, 12b, 12c in the respective packed beds 31a, 31b, 31c is separately adjustable.

The above-given EMBODIMENT 1 through 3 describe a high temperature apparatus for collecting an exhaust gas dust in which at least one air-passable support plate is located at a inclined angle against the direction of exhaust gas flow, and filtration particles are located on the support plate to form a thin packed bed giving free surface at top face thereof. The number of the packed beds, the size and shape of the filtration particles are not specifically limited to the description given above, and an optimum apparatus can be selected depending on the volume, temperature, dust content of the high temperature exhaust gas, the size distribution of the dust, and the target dust collection efficiency.

The description given above eliminated the description about the material of filtration particles. Examples of the applicable filtration particles are ceramic balls, alumina balls, iron ore, coal, activated carbon, coke, silica sand, gravel, and cement clinker. The particle size of the filtration particles may be in an approximate range of from 0.5 to 50 mm.

The discharged filtration particles with dust accumulated thereon may be reused after removing the dust by sieve screen, washing with water, or other means. If these filtration particles are made of coke, they may be used, without removing dust therefrom, as a fuel for electric furnace.

The description given above dealt with major configuration of the PREFRABLE EMBODIMENT 1. Specifically in the major configuration of the PREFERRED EMBODIMENT 1, when the inclined angle of the air-passable support plate is selected in a range of from the angle lower by 10 degrees than the dynamic angle of repose of the filtration particles to the angle higher by 10 degrees than the static angle of repose thereof, the ratio of moving speed of the filtration particles at near the top face of the packed bed (directly beneath the free surface) to the moving speed thereof at near the bottom face of the packed bed (directly above the support plate) becomes maximum.

In that case, the filtration particles in a portion of the packed bed directly beneath the boundary plane, which particles contain largest quantity of accumulated dust, can be preferentially discharged.

According to the above-given description, the fresh filtration particles are charged after discharged the filtration particles from the packed bed. The charge may be done while discharging the filtration particles.

An example of the PREFERRED EMBODIMENT 1 is given below using the apparatus for collecting an exhaust gas dust used in the EMBODIMENT 3.

Table 1 shows the conditions of high temperature exhaust gas. Table 2 shows the facilities and operating conditions of the dust-collecting device. Table 3 shows the dust collection efficiency and the pressure drop in the dust-collecting device. Table 2 and Table 3 also gives Comparative Example according to related art. As seen in Table 3, compared with the related art, the high temperature apparatus for collecting an exhaust gas dust according to the present invention gives high dust collection efficiency and significantly reduced pressure drop in spite of small discharge quantity of solid particles as the filtration medium per unit time.

**Table 1**

| Kind of gas | Electric furnace exhaust gas |
|---|---|
| Gas flow rate | 3,000 Nm³/h |
| Gas temperature | 250°C |
| Gas composition | CO₂ : 30%, CO : 20%, O₂ : 10%, N₂ : 40% |
| Dust content | 15g / Nm³ |
| Dust particle size | -10µm : 90% |

**Table 2**

| | Example (according to the EMBODIMENT 1) | Comparative Example |
|---|---|---|
| Duct inner size | 1.8 m in width x 1.8 m in height | same as left |
| Packed bed | 50 mm in thickness x 3 layers | 1,000 mm in thickness x 1 layer Angle 90° |
| | Inclined angle of support plate | |
| | (against horizontal direction) | |
| | 1st layer (upstream side) : 65° | |
| | 2nd layer (middle stream): 65° | |
| | 3rd layer (downstream side) : 65° | |
| Kind of filtration particles | Ceramics ball | same as left |
| Size of filtration particles | 1st layer (upstream side) : 10 mm | 5 mm |
| | 2nd layer (middle stream): 5 mm | |
| | 3rd layer (downstream side) : 2.5 mm | |
| Discharge rate of filtration particles | 1st layer: 500 kg/h | 2,500 kg/h |
| | 2nd layer : 400 kg/h | |
| | 3rd layer : 300 kg/h | |
| | (Total: 1,200 kg/h) | |

**Table 3**

| | Example (according to the EMBODIMENT 1) | Comparative Example |
|---|---|---|
| Dust content at exit | 0.03 g/Nm³ | 0.06 g/Nm³ |
| Dust collection efficiency | 99.8 % | 99.6 % |
| Pressure drop | 15 mmAq | 150 mmAq |

As described above, according to the EMBODIMENT 1, the dust collecting device using a packed bed of solid particles as the filtration medium is provided with a support plate, which allows air to pass therethrough. The support plate is located in the dust-collecting exhaust gas duct, through which duct the high temperature exhaust gas containing dust flows, and the support plate is positioned at a inclined angle against the direction of the exhaust gas flow. Solid particles as the filtration medium are located on the support plate to form a thin packed bed giving a free surface at top face thereof. The high temperature exhaust gas passes through the packed bed, entering from the free surface on the inclined packed bed, and moving toward the air-passable support plate, thus eliminating the dust from the exhaust gas. Since the thickness of the packed bed for removing dust is small, the pressure drop of the apparatus for collecting an exhaust gas dust is kept to a low level, and is able to sustain high dust collection efficiency. Furthermore, the place where the largest quantity of dust is accumulated is directly beneath the free surface of the packed bed, and the filtration particles with accumulated dust are heavier than the filtration particles without containing dust. Accordingly, on discharging the filtration particles from the inclined packed bed, the filtration particles, containing largest quantity of accumulated dust, directly beneath the free surface are preferentially discharged. As a result, the make up of filtration particles is minimized.

Furthermore, since the support plate supporting the packed bed is located in the dust-collecting exhaust gas duct in a inclined state, the dust-collecting apparatus can be designed in compact type compared with conventional upright packed bed design.

According to the PREFERRED EMBODIMENT 1, a plurality of air-passable support plates inclined against the direction of exhaust gas flow are positioned along the dust-collecting exhaust gas duct at a certain distance to each other, through which duct the high temperature exhaust gas containing dust flows. Solid particles as the filtration medium are located on the respective support plates to form thin packed beds giving free surface at top face of the respective thin beds. The high temperature exhaust gas passes through the packed bed, entering from the inclined free surface on the packed bed, and moving toward the air-passable support plate, thus eliminating the dust from the exhaust gas. Thus the dust emitted from upstream packed bed can be captured by downstream packed bed. As a result, high total dust collection efficiency is attained even when the quantity of dust in the exhaust gas is large and when the volume of the exhaust gas and the quantity of dust vary.

According to the PREFERRED EMBODIMENT 1, the particle size of the filtration particles in respective packed beds becomes smaller gradually in sequence of packed beds from the upstream side of the exhaust gas flow to the downstream side thereof. Therefore, a downstream side packed bed collects finer dust than upstream side packed bed. Thus, the configuration is particularly effective to the dust having a wide size distribution.

According to the PREFERRED EMBODIMENT 1, the inclined angle of the support plate located in the exhaust gas duct is selected in a range of from the angle lower by 10 degrees than the dynamic angle of repose of the filer particles to the angle higher by 10 degrees than the static angle of repose thereof. As a result, the ratio of moving speed of filtration particles at near the top face of the packed bed directly beneath the free surface to the moving speed thereof at near the bottom face of the packed bed above the support plate becomes maximum value. Furthermore, the filtration particles in the packed bed positioned directly beneath the boundary plane, which particles contain largest quantity of accumulated dust, can be preferentially discharged.

### PREFERRED EMBODIMENT 2

### EMBODIMENT 1 (according to the PREFERRED EMBODIMENT 2)

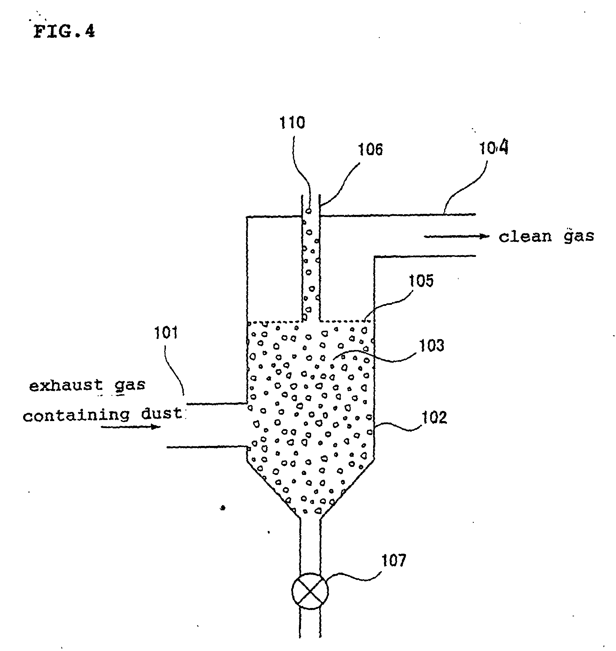

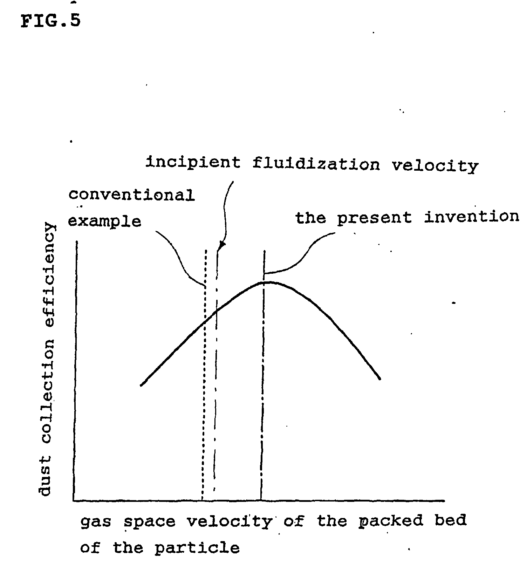

Fig. 4 shows a schematic cross sectional view of a high temperature apparatus for collecting an exhaust gas dust according to the EMBODIMENT 1 of the PREFERRED EMBODIMENT 2. Fig. 5 is a graph showing the variations of dust collection efficiency with the gas space velocity in a particle-packed bed according to the EMBODIMENT 1 of the PREFERRED EMBODIMENT 2.

In Fig. 4, the reference number 101 designates the exhaust gas duct through which the high temperature exhaust gas containing dust flows, the reference number 102 designates the furnace filled with filtration particles having narrowing cross section at lower section thereof, connecting the lower section thereof with the discharge end of the exhaust gas duct 101. The furnace filled with filtration particles 102 contains solid particles 110 as the filtration medium (hereinafter referred to as the filtration particles 110). The reference number 103 designates the particle-packed bed of the filtration particles 110, formed in the furnace filled with filtration particles 102. The particle-packed bed 103 is formed by, among the filtration particles 110 in the furnace filled with filtration particles 102, the filtration particles 110 between the gas inlet at lower section of the furnace filled with filtration particles 102 and the gas outlet at upper section thereof.

The reference number 104 designates the clean gas duct connected to a side of upper section of the furnace filled with filtration particles 102. The reference number 105 designates the air-passable partition plate located at upper section of the furnace filled with filtration particles 102 to prevent fluidization of the filtration particles 110. The partition plate is a perforated plate, and each of the perforated holes has smaller diameter than the size of filtration particle.

The reference number 106 designates the particles charge pipe penetrating the ceiling and the partition plate 105 of the furnace filled with filtration particles 102, and the reference number 107 designates the particles discharge unit located at bottom of the furnace filled with filtration particles 102 to discharge the filtration particles 110 to outside the furnace 102.

The operation of the apparatus for collecting an exhaust gas dust according to the EMBODIMENT 1 of the PREFERRED EMBODIMENT 2 is described below.

The high temperature exhaust gas containing dust flowing through the exhaust gas duct 101 enters the lower section of the particle-packed bed 103 of the furnace filled with filtration particles 102, and passes through the particle-packed bed 103 to leave from the upper section of the furnace filled with filtration particles 102. While the exhaust gas passes through the exhaust gas containing dust, the filtration particles 110 adsorb the dust to make the exhaust gas clean gas. The clean gas leaves the furnace 102 from the clean gas duct 104.

The filtration particles 110 on which dust accumulated in the particle-packed bed 103 in the furnace filled with filtration particles 102 are discharged from the furnace 102 by the particles discharge unit 107 at a specified rate, and, at the same time, the fresh filtration particles 110 are charged from the particle charge pipe 106 onto the particle-packed bed 103, thus regulating the pressure drop to a specified level.

In the EMBODIMENT 1 of the PREFERRED EMBODIMENT 2, the reason of locating the air-passable partition plate 105 that contacts with the top face of the particle-packed bed 103 in the furnace filled with filtration particles 102 is the following. When the gas space velocity in the particle-packed bed 103 in the furnace filled with filtration particles 102 is increased to the incipient fluidization velocity or more, the gas space velocity exceeds the incipient fluidization velocity of the filtration particles 110. Then, the filtration particles 110 at upper section of the particle-packed bed 103 begin to fluidize. Since, however, the partition plate 105 prevents the fluidization of the filtration particles 110, the gas space velocity can be increased to above the incipient fluidization velocity, thus sustaining high dust collection efficiency.

### Example 1

The Example 1 of the PREFERRED EMBODIMENT 2 describes the case using the apparatus for collecting an exhaust gas dust of the EMBODIMENT 1 of the PREFERRED EMBODIMENT 2.

Table 4 shows the high temperature exhaust gas conditions. Table 5 shows the pressure drop and the dust collection efficiency of the dust-collecting device.

The operating conditions of the dust-collecting device are the following. The applied filtration particles are ceramic balls having 1 mm of particle size (0.35 m/s of incipient fluidization velocity, 1 m/s of space velocity at the maximum dust collection efficiency, 2,000 kg/m³ of density and 2,500 kg/h of particle charge/discharge rate).

Under the conditions, a separate test confirmed that the gas space velocity giving the maximum dust collection efficiency in the particle-packed bed 103 was 1.0 m/s. Accordingly, the diameter of the particle-packed bed 103 was determined to establish the gas space velocity of 1.0 m/s.

When the gas space velocity is increased to 1.0 m/s, the velocity exceeds the incipient fluidization velocity of the filtration particles, so the filtration particles begin to fluidize to degrade the dust collection efficiency. However, by installing the partition plate 105 at upper section of the packed bed 103, as in the EMBODIMENT 2, the fluidization of the filtration particles 110 is prevented. As a result, as shown in Fig. 5, the gas space velocity can be increased to the incipient fluidization velocity or above, and the high dust collection efficiency is assured.

Table 5 shows that, compared with the Comparative Example, the high temperature apparatus for collecting an exhaust gas dust according to the EMBODIMENT 2 can increase the dust collection efficiency by increasing the gas space velocity, and, furthermore, the pressure drop significantly decreases.

**Table 4**

| Kind of gas | Electric furnace exhaust gas |
|---|---|
| Gas flow rate | 3,000 Nm³/h |
| Gas temperature | 250°C |
| Gas composition | CO₂: 30%, CO : 20%, O₂ : 10%, N₂ : 40% |
| Dust content | 15g / Nm³ |
| Dust particle size | -10µm : 90% |

**Table 5**

| | Example (according to the PREFERRED EMBODIMENT 2) | Comparative Example |
|---|---|---|
| Space velocity m/s | 1 | 0.3 |
| Furnace diameter m | 2.0 | 3.7 |
| Furnace height m | 1 | 4 |
| Pressure drop mmAq | 1420 | 2600 |
| Dust content at exit g/Nm³ | 0.008 | 0.2 |
| Dust collection efficiency % | 99.95 | 98.67 |

### EMBODIMENT 2 (according to the PREFERRED EMBODIMENT 2)

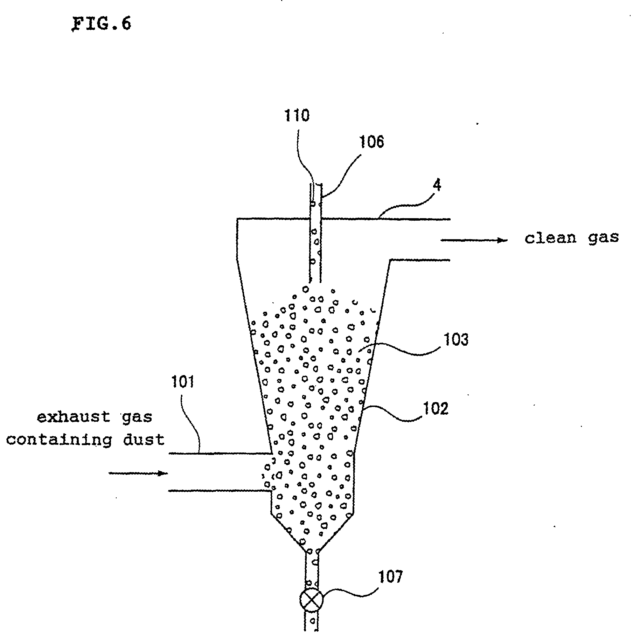

Fig. 6 shows a schematic cross sectional view of a high temperature apparatus for collecting an exhaust gas dust according to the EMBODIMENT 2 of the PREFERRED EMBODIMENT 2.

In Fig. 6, the same configuration with the EMBODIMENT 1 of the PREFERRED EMBODIMENT 2 has the same reference number with each other, and no further description thereof is given here.

The EMBODIMENT 2 is a modification of the EMBODIMENT 1, in which the partition plate 105 installed in the furnace filled with filtration particles of the EMBODIMENT 1 is replaced with a furnace filled with filtration particles 102 having a specific shape.

That is, according to the EMBODIMENT 2, the inner diameter of the furnace filled with filtration particles 102 reduces from the bottom gas inlet section toward the top gas outlet section of the furnace 102 to provide inclined side walls thereof, thus giving smaller diameter of the furnace 102 at gas inlet section and larger diameter thereof at gas outlet section.

The reason that the inner diameter of the furnace filled with filtration particles 102 reduces from the bottom gas inlet section toward the top gas outlet section of the furnace 102 by providing inclined side walls thereof to give smaller diameter of the furnace 102 at gas inlet section and larger diameter thereof at gas outlet section is the following. Even when the gas space velocity at the particle-packed bed 103 of the furnace filled with filtration particles 102 is increased to the incipient fluidization velocity or above at the gas inlet section, the particles do not enter the fluidization state because the location is at lower section of the particle-packed bed 103 so that the fluidization of the filtration particles 110 is prevented. Accordingly, the gas space velocity can be brought to at or above the incipient fluidization velocity of the filtration particles 110, which then allows to assure high dust collection efficiency.

### Example 2

As the Example 2 of the EMBODIMENT 2, the description is given on the case of using the apparatus for collecting an exhaust gas dust of the EMBODIMENT 2 in the following.

Table 6 shows the conditions of high temperature exhaust gas in the Example 2. Table 7 shows the pressure drop and the dust collection efficiency of the dust-collecting device in the Example 2.

The operating conditions of the dust-collecting device are the following. The applied filtration particles are ceramic balls having 1 mm of particle size (0.35 m/s of incipient fluidization velocity), 2,000 kg/m³ of density, and 2,500 kg/h of particle charge/discharge rate).

Under the conditions, a separate test confirmed that the gas space velocity giving the maximum dust collection efficiency in the particle-packed bed 103 was 1.0 m/s.

Under thus established conditions of 1.0 m/s of the inlet gas velocity of the particle-packed bed 103, and 0.3 m/s of the exit gas velocity thereof, the particle-packed bed 103 was designed to give 1.0 m of the diameter at gas inlet section and 2.0 m of the diameter at gas outlet section.

Since dust attaches mainly to the filtration particles 110 at inlet section of the dust-laid exhaust gas in the particle-packed bed 103 of the furnace filled with filtration particles 102, the percentage of dust collection increases in the zone compared with the gas outlet section at downstream side in the particle-packed bed 103. Accordingly, to attain high dust collection efficiency, the gas inlet section diameter of the particle-packed bed 103 is determined so as the gas velocity at gas inlet section of the particle-packed bed 103 to become 1.0 m/s. In that case, the gas velocity becomes larger than the incipient fluidization velocity of the filtration particles. However, there is no possibility for the particles to enter fluidization.

On the other hand, the quantity of dust is less at the gas outlet section of the particle-packed bed 103 than that at the gas inlet section. Nevertheless, dust attaches to the filtration particles 110 even at the gas outlet section to determine the ultimate dust collection efficiency.

If, however, the diameter of the particle-packed bed 103 at the gas outlet section is set to the same diameter thereof at the gas inlet section, the gas velocity exceeds the incipient fluidization velocity of the filtration particles 110, which results in fluidization of the filtration particles 110 to induce re-emissions of dust once adhered to the filtration particles 110, thus degrading the dust collection efficiency.

Consequently, the diameter of the particle-packed bed 103 at the gas outlet section is determined so as the gas velocity at the gas outlet section to become the incipient fluidization velocity or below, (0.35 m/s or below), of the filtration particles.

To establish the configuration of the particle-packed bed 103 having different diameters between the gas inlet section and the gas outlet section, there are several methods including the one that has inclined walls on the furnace filled with filtration particles 102, and another one that has two-stage diameter configuration.

Even when the gas space velocity in the particle-packed bed 103 of the furnace filled with filtration particles 102 at the gas inlet section is increased to as high as 1.0 m/s, there is no possibility of fluidization of particles because the position of the particles is at lower section of the particle-packed bed 103. The diameter of the particle-packed bed 103 at the gas inlet section is designed to smaller than the diameter thereof at the gas outlet section. Accordingly, the gas velocity at the gas outlet section of the particle-packed bed 103 is not more than 0.35 m/s, not exceeding the incipient fluidization velocity of the filtration particles 110, which allows the gas space velocity to increase to incipient fluidization velocity or above not inducing the fluidization of the filtration particles 110. As a result, high dust collection efficiency is assured.

Table 7 suggests the above-described phenomenon. That is, compared with related art, the high temperature apparatus for collecting an exhaust gas dust of the PREFERRED EMBODIMENT 2 can increase the dust collection efficiency by increasing the gas space velocity, and the pressure drop is significantly decreased.

**Table 6**

| Kind of gas | Electric furnace exhaust gas |
|---|---|
| Gas flow rate | 1,000 Nm³/h |
| Gas temperature | 600°C |
| Gas pressure | 1.5 ata |
| Gas composition | CO₂ : 30%, CO : 20%, O₂ : 10%, N₂ : 40% |
| Dust content | 15g / Nm³ |
| Dust particle size | -10µm : 90% |

**Table 7**

| | Example (according to the EMBODIMENT 2) | Comparative Example |
|---|---|---|
| Space velocity m/s | 1 | 0.3 |
| Furnace diameter m | Upper section 2.0 Lower section 1.0 | 3.7 |
| Furnace height m | 1.5 | 3.5 |
| Pressure drop mmAq | 1520 | 2800 |
| Dust content at exit g/Nm³ | 0.010 | 0.15 |
| Dust collection efficiency % | 99.94 | 99.00 |

Examples 1 and 2 of the PREFERRED EMBODIMENT 2 described specific dimensions and values of operational conditions as the high temperature apparatus for collecting an exhaust gas dust. The diameter and shape of the particle-packed bed 103, and the size and shape of the filtration particles 110 are not specifically limited to the description given above, and an optimum apparatus can be selected depending on the volume, temperature, dust content of the high temperature exhaust gas, the size distribution of the dust, the target dust collection efficiency, and other variables.

The description given above eliminated the description about the material of filtration particles 110. Examples of the applicable filtration particles 110 are ceramic balls, alumina balls, iron ore, coal, activated carbon, coke, silica sand, gravel, and cement clinker. The particle size of the filtration particles 110 may be in an approximate range of from 0.5 to 50 mm.

The discharged filtration particles 110 with dust accumulated thereon may be reused after removing the dust by sieve screen, washing with water, or other means. If these filtration particles 110 are made of coke, they may be used, without removing dust therefrom, as a fuel for electric furnace.

According to the above-given description, the fresh filtration particles are charged after discharged the filtration particles from the packed bed. The charge may be done while discharging the filtration particles.

As described above, the PREFERRED EMBODIMENT 2 deals with an apparatus for collecting an exhaust gas dust that conducts elimination of dust by letting the high temperature exhaust gas containing dust pass through a filtration medium. The apparatus has the furnace filled with filtration particles having a connection with the exhaust gas duct, through which the high temperature exhaust gas containing dust flows, at a 'side wall of lower section thereof, and having a connection with the exhaust gas outlet at top thereof, while loading solid particles as the filer medium therein to create the particle-packed bed, which particle-packed bed has the air-passable partition plate contacting the top face of the particle-packed bed, thus letting the high temperature exhaust gas pass through the particle-packed bed to remove dust from the exhaust gas. Even when the gas space velocity in the particle-packed bed is increased to above a certain level to exceed the incipient fluidization velocity of the filtration particles to induce the fluidization of the filtration particles at upper zone of the particle-packed bed, the partition plate prevents the fluidization of the filtration particles. Therefore, the gas space velocity can be increased to attain high dust collection efficiency, further the pressure drop across the apparatus is significantly reduced.

The PREFERRED EMBODIMENT 2 deals with an apparatus for collecting an exhaust gas dust that removes dust by letting the high temperature exhaust gas containing dust pass through the filtration medium. The apparatus has the furnace filled with filtration particles having a connection with the exhaust gas duct, through which the high temperature exhaust gas containing dust flows, at a side wall of lower section thereof, and having a connection with the exhaust gas outlet at top thereof, and has a configuration of smaller diameter thereof at lower section of entering the exhaust gas than the diameter thereof at upper section of exiting the exhaust gas, while loading solid particles as the filer medium therein to create the particle-packed bed having smaller diameter thereof at lower section of entering the exhaust gas than diameter thereof at upper section of exiting the exhaust gas, thus letting the high temperature exhaust gas pass through the particle-packed bed to remove dust from the exhaust gas. As a result, even when the gas space velocity in the particle-packed bed is increased to the incipient fluidization velocity thereof at the gas inlet section, the filtration particles do not begin fluidization because the gas inlet section is lower portion of the particle-packed bed, and, the gas velocity in the particle-packed bed at the gas exit section becomes at or below the incipient fluidization velocity thereof, and does not exceed the incipient fluidization velocity thereof. Therefore, the fluidization of the filtration particles can be prevented, so the gas space velocity can be increased to attain high dust collection efficiency, further the pressure drop across the apparatus is significantly reduced.

### PREFERRED EMBODIMENT 3

### EMBODIMENT 1

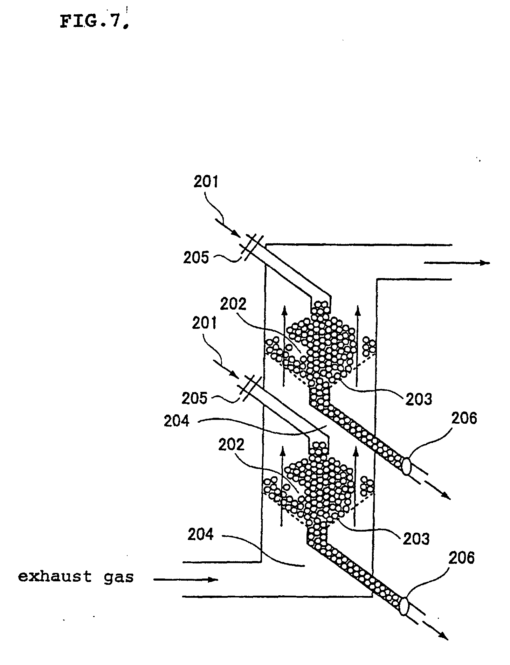

Fig. 7 shows an example of a high temperature apparatus for collecting an exhaust gas dust according to the EMBODIMENT 1 of the PREFERRED EMBODIMENT 3, giving a cross sectional view thereof in which the packed bed of solid particles as the filtration medium is a counter-flow type moving bed. (Hereinafter the configuration given in Fig. 7, where the flow of the exhaust gas and the flow of the filtration particles are in opposite direction to each other, is called the "counter-flow moving bed".)

The exhaust gas enters from the lower section of the dust collecting device, passes through the lowermost stage of space 204, then passes through a thin packed bed 202 loaded with solid particles 201 as the filtration medium, (hereinafter the solid particles as the filtration medium is referred to as the filtration particles), supported on an air-passable support plate 203, (hereinafter the packed bed loaded with the filtration particles supported by the support plate is referred to as the filtration particle bed), succeedingly passes an upper thin filtration particle bed 202 via an intermediate space 204, and finally leaves the dust collecting device from top thereof.

On the other hand, the filtration particles 201 that form the filtration particle bed 202 are supplied from the filtration particles charge unit 205 located above each filtration particle bed 202, and are discharged from the filtration particles discharge unit 206 located beneath each filtration particle bed 202.

This EMBODIMENT has the same basic configuration such as the mechanism for determining the bed thickness of each filtration particle bed 202 and the mechanism for adjusting the residence time of filtration particles 201 in each filtration particle bed with that of conventional counter-flow moving bed, except that the number of the filtration particle beds 202 is more than one and that the thickness of each filtration particle bed 202 is thin.

In the exhaust gas flow described above, the dust in the exhaust gas does not collide against the filtration medium within the space 204. Consequently, the frequency of inertial collisions of the dust in the exhaust gas against the filtration medium suddenly increases on entering the exhaust gas into the lower stage of thin filtration particle bed 202 via the lowermost space 204 and on entering thereof into the upper stage of thin filtration particle bed 202 via the intermediate space 204. That is, according to this EMBODIMENT, each of the boundary plane between the lowermost stage space 204 and the lower stage thin filtration particle bed 202, and the boundary plane between the intermediate space 204 and the upper stage thin filtration particle bed 202 is the interface where the frequency of inertial collisions of the dust in exhaust gas against the filtration medium discontinuously increases. As a result, the dust in the exhaust gas is separated from the gas stream and is heavily accumulated in the portion of filtration particle bed 202 directly beneath the boundary plane.

After the dust accumulated in the packed bed becomes a certain quantity, the dust scatters toward downstream side of the filtration particle bed carried by the exhaust gas stream (the dust collection efficiency decreases). Even under the condition, however, high dust collection efficiency can be maintained by adjusting the residence time of the filtration particles 201 in the filtration particle bed 202 so as the quantity of accumulated dust per unit volume of the filtration particle bed within the filtration particle bed 202 at directly beneath the boundary plane to keep not higher than the saturation level of accumulation thereof. In other words, the filtration particles 201 loaded with the dust are discharged from the filtration particle bed 202 at an adequate rate using the filtration particles discharge unit 206, and the fresh filtration particles 201 without containing dust are supplied to the filtration particle bed 202 at an adequate rate using the filtration particles charge unit 205, thus attaining high dust collection efficiency.

Since this EMBODIMENT adopts two boundary planes in series, the dust once emitted from the lower stage filtration particle bed 202 can be captured at the boundary plane between the intermediate space 204 and the upper stage filtration particle bed 202, located above the lower stage filtration particle bed 202. As a result, totally high dust collection efficiency is attained. Furthermore, compared with conventional high temperature apparatus for collecting an exhaust gas dust which has a packed bed of solid particles as the filtration medium, this EMBODIMENT applies thin bed height for individual filtration particle beds 202 to give a thin total bed height in the direction of exhaust gas stream. So the pressure drop as the high temperature apparatus for collecting an exhaust gas dust is kept low level.

This EMBODIMENT deals with two boundary planes, each between the space 204 and the filtration particle bed 202, as the interface where the frequency of inertial collisions of dust in the exhaust gas against the filtration medium discontinuously increases. If, however, the quantity of dust in the exhaust gas is large, and the emissions of dust from the upper stage filtration particle bed 202 cannot be neglected, the particle size of the filtration particles 201 in the upper stage filtration particle bed 202 may be smaller than that in the lower stage filtration particle bed 202, or, adding to the means, the shape of filtration particles may be varied to increase the frequency of inertial collisions of the dust in the exhaust gas against the filtration particles, or furthermore, the number of boundary planes where the frequency of collisions of dust in the exhaust gas discontinuously increases may be set to three or more, thus further increasing the total dust collection efficiency to reduce the quantity of discharge of filtration particles.

Since the quantity of dust accumulated in the lower stage filtration particle bed 202 differs from the quantity of dust accumulated in the upper stage filer particles bed 202 depending on the conditions such as dust particle size distribution, it is preferable that the residence time of filtration particles in each filtration particle bed 202 is adjustable.

### EMBODIMENT 2

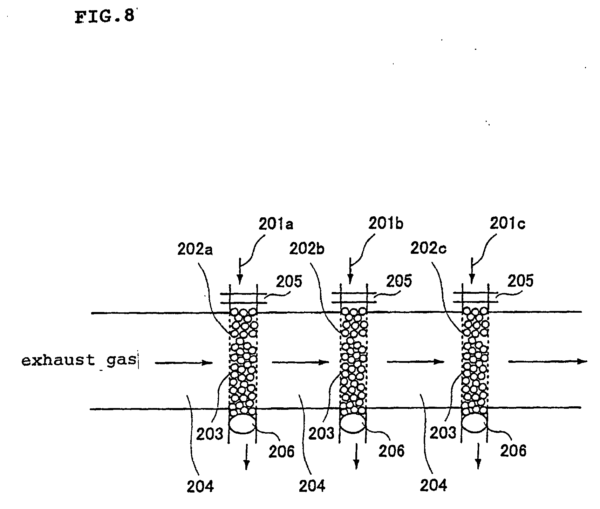

Fig. 8 shows an example of a high temperature apparatus for collecting an exhaust gas dust according to the EMBODIMENT 2 of the PREFERRED EMBODIMENT 3, giving a cross sectional view thereof in which the packed bed of solid particles as the filtration medium is a cross-flow type moving bed. (Hereinafter the configuration given in Fig. 8, where the flow of the exhaust gas and the flow of the filtration particles are in cross-flow direction, or in normal to each other, is called the "cross-flow moving bed".) According to the EMBODIMENT 2, three boundary planes are adopted as the interfaces where the frequency of inertial collisions of dust in the exhaust gas against the filtration medium discontinuously increases, namely the ones between respective spaces 204 and respective filtration particle beds 202a, 202b, 202c. Furthermore, the mean particle size of filtration particles 201a, 201b, 201c in the respective filtration particle beds 202a, 202b, 202c is reduced gradually in sequence along the flow of the exhaust gas.

This EMBODIMENT has the same basic configuration such as the mechanism for forming the filtration particle bed 202 using air-passable support plate 203, for using the filtration particles charge unit 205 and the filtration particles discharge unit 206, and the mechanism for adjusting the residence time of filtration particles 201 in each filtration particle bed 202 with that of conventional counter-flow moving bed, except that the number of the filtration particle beds 202 is more than one and that the thickness of each filtration particle bed 202 is thin.

Similar with the counter-flow moving bed in the EMBODIMENT 1, the cross-flow moving bed in the EMBODIMENT 2 shows abrupt increase in the frequency of inertial collisions of dust in the exhaust gas at the moment that the exhaust gas introduced in the dust collecting device enters from the space 204 to the filtration particle bed 202. Accordingly, the dust is separated from the exhaust gas in the filtration particle bed 202 at directly beneath the boundary plane between the space 204 and the filtration particle bed 202, and the dust heavily accumulated at that portion.

After the dust accumulated in the packed bed becomes a certain quantity, the dust scatters in the bed toward downstream side of the gas stream carried by the exhaust gas stream (the dust collection efficiency decreases). Even under the condition, however, high dust collection efficiency can be maintained by adjusting the residence time of the filtration particles 201 in the filtration particle bed 202 so as the quantity of accumulated dust per unit volume of the filtration particle bed within the filtration particle bed 202 at directly beneath the boundary plane, particularly per unit volume of the filtration particle bed at lower section thereof near the filtration particles discharge unit 206, to keep not higher than the saturation level of accumulation thereof. In other words, the filtration particles 201 loaded with the dust are discharged from the filtration particle bed 202 at an adequate rate using the filtration particles discharge unit 206, and the fresh filtration particles 201 without containing dust are supplied to the filtration particle bed 202 at an adequate rate using the filtration particles charge unit 205, thus attaining high dust collection efficiency.

Since the EMBODIMENT 2 adopts three boundary planes in series, the dust once emitted from the upstream side filtration particle bed 202a can be captured at the boundary plane between the succeeding intermediate space 204 and the filtration particle bed 202b. Furthermore, the dust emitted from the particle bed 202b can be captured at the boundary plane between the next space 204 and the filtration particle bed 202c. As a result, totally high dust collection efficiency is attained.

Furthermore, compared with conventional high temperature apparatus for collecting an exhaust gas dust which has a packed bed of solid particles as the filtration medium, the EMBODIMENT 2 applies thin bed height for individual filtration particle beds 202 to give a thin total bed height in the direction of exhaust gas stream. So the pressure drop as the high temperature apparatus for collecting an exhaust gas dust is kept low level.

According to the EMBODIMENT 2, three boundary planes are adopted as the interfaces where the frequency of inertial collisions of dust in the exhaust gas against the filtration medium discontinuously increases, namely the ones between respective spaces 204 and respective filtration particle beds 202a, 202b, 202c. Furthermore, the mean particle size of filtration particles 201a, 201b, 201c in the respective filtration particle beds 202a, 202b, 202c is reduced gradually in sequence along the flow of the exhaust gas. Consequently, a filtration particle bed downstream side along the exhaust gas flow contains filtration particles of smaller particle size, (for example, the particle size of filtration particles in the filtration particle bed 202b is smaller than that in the filtration particle bed 202a, and the particle size of filtration particles in the filtration particle bed 202c is smaller than that in the filtration particle bed 202b), so the increasing rate of the frequency of inertial collisions of dust in the exhaust gas at boundary plane between the space 204 and the filtration particle bed 202 increases along the direction of the exhaust gas flow, (for example, the increasing rate of frequency of inertial collisions of dust is higher in the filtration particle bed 202b than that in the filtration particle bed 202a, and the increasing rate of frequency of inertial collisions of dust is higher in the filtration particle bed 202c than that in the filtration particle bed 202b). That is, the EMBODIMENT 2 is particularly effective when the exhaust gas contains large quantity of dust, and when the dust has a wide size distribution.

Since the quantity of dust accumulated in individual filtration particle beds 202 (202a, 202b, 202c) differs depending on the conditions such as dust particle size distribution, it is preferable that the residence time of filtration particles in each filtration particle bed 202 (202a, 202b, 202c)is adjustable.

### EMBODIMENT 3

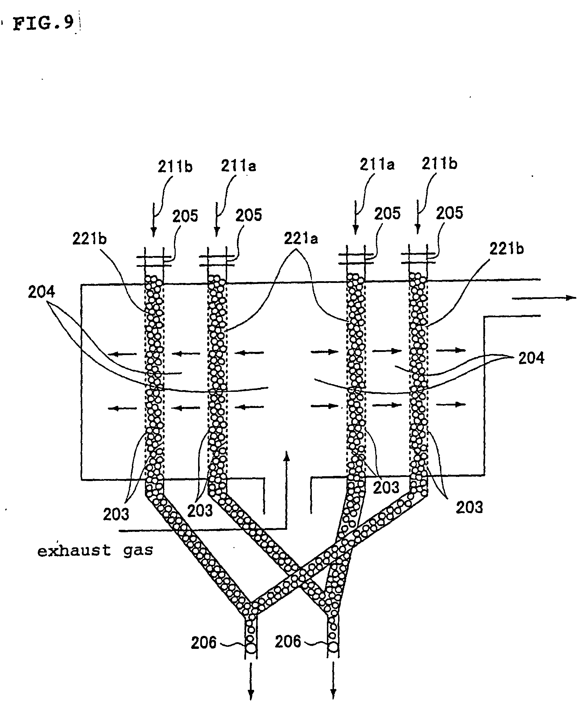

Fig. 9 shows an example of high temperature exhaust gas dust collection unit according to the EMBODIMENT 3 of the PREFERRED EMBODIMENT 3, giving a schematic cross sectional view of cross-flow moving beds each in an annual packed bed shape, using solid particles as the filtration medium. (Hereinafter, the packed bed shown in Fig. 9 in which the exhaust gas flows in normal direction to annular packed bed of filtration particles is referred to as the "annular cross-flow packed bed".) According to the EMBODIMENT 3, two boundary planes are adopted as the interfaces where the frequency of inertial collisions of dust in the exhaust gas against the filtration medium discontinuously increases, namely the ones between the respective spaces 204 and the respective filtration particle beds 221a, 221b. Furthermore, the mean particle size of filtration particles 211a, 211b in the respective filtration particle beds 221a, 221b is reduced gradually in sequence along the flow of the exhaust gas.

The EMBODIMENT 3 has the same basic configuration such as the mechanism for forming the filtration particle bed 221 using air-passable support plate 203, for using the filtration particles charge unit 205 and the filtration particles discharge unit 206, and the mechanism for adjusting the residence time of filtration particles 211 in each filtration particle bed 221 with that of conventional annular cross-flow moving bed, except that the number of the filtration particle beds 221 is more than one and that the thickness of each filtration particle bed 221 is thin.

Similar with the cross-flow moving bed 221, the annular cross-flow moving bed in the EMBODIMENT 3 shows abrupt increase in the frequency of inertial collisions of dust in the exhaust gas at the moment that the exhaust gas introduced in the dust collecting device enters from the space 204 to the filtration particle bed 221. Accordingly, the dust is separated from the exhaust gas in a portion of the filtration particle bed 221 at directly beneath the boundary plane between the space 204 and the filtration particle bed 221, and the dust heavily accumulated at that portion.

After the dust accumulated in the packed bed becomes a certain quantity, the dust scatters in the bed toward downstream side of the gas stream carried by the exhaust gas stream (the dust collection efficiency decreases). Even under the condition, however, high dust collection efficiency can be maintained by adjusting the residence time of the filtration particles 211 in the filtration particle bed 221 so as the quantity of accumulated dust per unit volume of the filtration particle bed within the filtration particle bed 221 at directly beneath the boundary plane, particularly per unit volume of the filtration particle bed at lower section thereof near the filtration particles discharge unit 206, to keep not higher than the saturation level of accumulation thereof. In other words, the filtration particles 211 loaded with the dust are discharged from the filtration particle bed 221 at an adequate rate using the filtration particles discharge unit 206, and the fresh filtration particles 211 without containing dust are supplied to the filtration particle bed 221 at an adequate rate using the filtration particles charge unit 205, thus attaining high dust collection efficiency.

Since the EMBODIMENT 3 adopts two boundary planes in series, the dust once emitted from the upstream side filtration particle bed 221a can be captured at the boundary plane between the succeeding intermediate space 204 and the filtration particle bed 221b. As a result, totally high dust collection efficiency is attained.

Furthermore, compared with conventional high temperature apparatus for collecting an exhaust gas dust which has a packed bed of solid particles as the filtration medium, the EMBODIMENT 3 applies thin bed height for individual filtration particle beds 221 (221a, 221b) to give a thin total bed height in the direction of exhaust gas stream. So the pressure drop as the high temperature apparatus for collecting an exhaust gas dust is kept low level.

According to the EMBODIMENT 3, the mean particle size of filtration particles 211a, 211b in the respective filtration particle beds 221a, 221b is reduced gradually in sequence along the flow of the exhaust gas. Accordingly, the increasing rate of the frequency of inertial collisions of dust when the exhaust gas passes through a boundary plane between a space 204 and a filtration particle bed 221 increases at downstream side along the exhaust gas flow, or increases at the filtration particle bed 221b more than at the filtration particle bed 221a. In addition, the area of boundary plane between a space 204 and a filtration particle bed 221 per the volume of the dust collecting device increases along the flow of exhaust gas, (the boundary plane area in the filtration particle bed 221b is wider than that in the filtration particle bed 221a). Consequently, the EMBODIMENT 3 is particularly effective to collect dust at high efficiency from large volume of exhaust gas, and to collect finer dust from exhaust gas, though the EMBODIMENT 3 requires a plurality of filtration particles charge unit 205 and of filtration particles discharge unit 206.

Since the quantity of dust accumulated in each filtration particle bed 221 (221a, 221b) differs depending on the conditions such as dust particle size distribution, it is preferable that the residence time of filtration particles in each filtration particle bed 211 (211a, 211b) is adjustable.

### EMBODIMENT 4

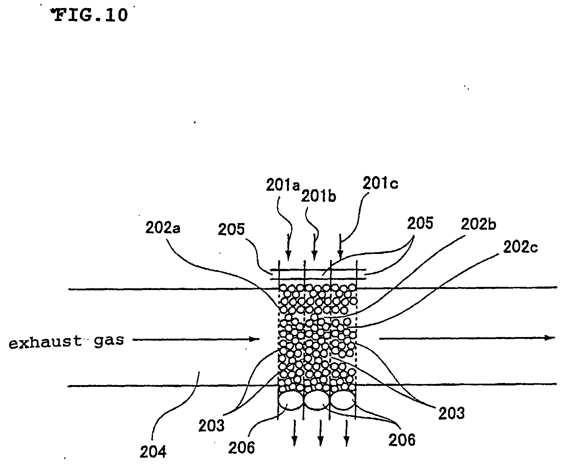

Fig. 10 shows an example of high temperature exhaust gas dust collection unit according to the EMBODIMENT 3 of the PREFERRED EMBODIMENT 4, giving a schematic cross sectional view of cross-flow moving bed using solid particles as the filtration medium while each packed bed contacts with adjacent one. According to this EMBODIMENT, each of the filtration particle beds 202 contacts with adjacent one, (202a with 202b, 202b with 202c). The mean particle size of the filtration particles 201 is selected to decrease in individual filtration particle beds 202 along the direction of exhaust gas flow, or in the decreasing order of from 201a, 201b, to 201c. Accordingly, the boundary plane where the frequency of inertial collisions of dust in the exhaust gas discontinuously increases exists one between the space 4 and the filtration particle bed 202a in the dust collecting device, and two between the filtration particle beds (between 202a and 202b, and between 202b and 202c).

This EMBODIMENT has the same basic configuration such as the mechanism for forming the filtration particle bed 202 using air-passable support plate 203, for using the filtration particles charge unit 205 and the filtration particles discharge unit 206, and the mechanism for adjusting the residence time of filtration particles 211 in each filtration particle bed 202 with that of conventional cross-flow moving bed, except that the number of the filtration particle beds 221 is more than one and that the thickness of each filtration particle bed 202 is thin.

The high temperature apparatus for collecting an exhaust gas dust of the cross-flow moving bed type with contacted adjacent filtration particle beds 202 (202a with 202b, and 202b with 202c) is a modification of the EMBODIMENT 2. According to this EMBODIMENT , the frequency of inertial collisions of dust in the exhaust gas shows abrupt increase when the exhaust gas enters the filtration particle bed 202a from the space 204 and when the exhaust gas passes through individual boundary planes between the filtration particle beds (between 202a and 202b, and between 202b and 202c). As a result, the dust is separated from the exhaust gas at and is heavily accumulated nearly at directly beneath the boundary plane between the space 204 and the filtration particle bed 202a and at directly beneath the boundary plane between the filtration particle beds (between 202a and 202b and between 202b and 202c).

After the dust accumulated in the packed bed becomes a certain quantity, the dust scatters in the bed toward downstream side of the gas stream carried by the exhaust gas stream (the dust collection efficiency decreases). Even under the condition, however, high dust collection efficiency can be maintained by adjusting the residence time of the filtration particles 201 in the filtration particle bed 202 so as the quantity of accumulated dust per unit volume of the filtration particle bed within the filtration particle bed 202 at directly beneath the boundary plane, particularly per unit volume of the filtration particle bed at lower section thereof near the filtration particles discharge unit 206, to keep not higher than the saturation level of accumulation thereof. In other words, the filtration particles 201 loaded with the dust are discharged from the filtration particle bed 202 at an adequate rate using the filtration particles discharge unit 206, and the fresh filtration particles 201 without containing dust are supplied to the filtration particle bed 202 at an adequate rate using the filtration particles charge unit 205, thus attaining high dust collection efficiency.

Since the EMBODIMENT 4 adopts three boundary planes in series, the dust once emitted from the upstream side filtration particle bed 202a can be captured at the boundary plane between the filtration particle bed 202a and the filtration particle bed 202b. Further the boundary plane between the filtration particle bed 202b and the filtration particle bed 202c can capture the dust emitted from the filtration particle bed 202b. As a result, totally high dust collection efficiency is attained.

Furthermore, compared with conventional high temperature apparatus for collecting an exhaust gas dust which has a packed bed of solid particles as the filtration medium, the EMBODIMENT 4 applies thin height of individual particles beds 202 (202a, 202b, 202c) to give a thin total bed height in the direction of exhaust gas stream. So the pressure drop as the high temperature apparatus for collecting an exhaust gas dust is kept low level.

The increasing rate of the frequency of inertial collisions of dust in the exhaust gas against the filtration medium is smaller at the boundary plane between the filtration particle beds 202 than at the boundary plane between the space 204 and the filtration particle bed 202. Accordingly, compared with the EMBODIMENT 2 in which all of the three boundary planes where the frequency of inertial collision of dust in the exhaust gas discontinuously increases are between the space 204 and the filtration particle bed 202, the EMBODIMENT 4 gives inferior dust collection efficiency owing to the configuration of two boundary planes among three are between the filtration particle beds 202. If, however, the dust content is relatively low or if the dust has a wide size distribution, the configuration of the EMBODIMENT 4 is particularly effective because the configuration of the EMBODIMENT 4 allows compact design.

In addition, according to the EMBODIMENT 4, air-passable support plate between filtration particle beds (between 202a and 202b and between 202b and 202c) can be eliminated because each of the filtration particle beds contacts with adjacent one, (202a with 202b, 202b with 202c). Accordingly, the pressure drop corresponding to that of support plate decreases, and the maintenance load is lightened. Further advantages are that the discharge of filtration particles (201a, 201b, 201c) from respective filtration particle beds (201a, 202b, 202c) can be done together, (not necessarily to adopt the same discharge rate for all of the beds), and that the classification of filtration particles being charged to each filtration particle bed 202, (particle size of filtration particles for the packed bed 202a > particle size for 202b > particle size for 202c) may be done by a simple method such as the one using percolation phenomenon which is observed in rolling down particles on an inclined plate, thus allowing further compact design of the apparatus. In addition, when a baffle plate or the like is inserted between individual filtration particle beds (between 202a and 202b and between 202b and 202c), the dust collection efficiency can further be improved. An example of that type of baffle plate or the like is a perforated support plate to form a space against the filtration particles at each whole position.

Also for the above-described EMBODIMENT 1 and 3, the configuration of the EMBODIMENT 4, or contacting individual filtration particle beds (202, 202, 202a, 202b), can be applied. In that case, the above-described modification example can also be applied.

### EMBODIMENT 5

Above-described EMBODIMENT 1 through 4 of the EMBODIMENT 3 gave examples of the high temperature apparatus for collecting an exhaust gas dust using the solid particle bed as the filtration medium specifically in a type of counter-flow moving bed, cross-flow moving bed, and annular cross-flow moving bed. The EMBODIMENT 3 is not limited to these types, and other types providing similar function as above may be applicable. Examples of other applicable types are co-current packed bed and various kinds of fixed bed having intermittent discharge and charge functions.

Also for the particle size and shape of the filtration particles, the number of filtration particle beds, the presence/absence of contact between adjacent filtration particle beds, and the mechanism and number of the filtration particles charge units and the filtration particles discharge units, an optimum combination can be adopted taking into account of the volume, temperature, dust content of the high temperature exhaust gas, the size distribution of dust particles, the target dust collection efficiency, and other variables. The description given above eliminated the description about the material of filtration particles. Examples of the applicable filtration particles are ceramic balls, alumina balls, iron ore, coal, activated carbon, coke, silica sand, gravel, and cement clinker. The particle size of the filtration particles is in an approximate range of from 0.5 to 50 mm. The discharged filtration particles with dust accumulated thereon may be reused after removing the dust by sieve screen, washing with water, or other means. If these filtration particles may be made of coke, they may be used, without removing dust therefrom, as a fuel for electric furnace.

### (Example)

As an example of the EMBODIMENT 3, the high temperature apparatus for collecting an exhaust gas dust used in the EMBODIMENT 2 of the EMBODIMENT 3 is applied. The increasing rate of the frequency of inertial collisions of dust in the exhaust gas, (or the mean particle size of filtration particles packed in each filtration particle bed), at the boundary plane between each space and filtration particle bed was determined so as the quantity of dust collected at each filtration particle bed to become almost equal to each other. During normal continuous operation, the discharge rate of the filtration particles from each filtration particle bed was adjusted. Table 8 shows the conditions of high temperature exhaust gas. Table 9 shows the equipment and operating conditions. Table 10 shows the dust collection efficiency and the pressure drop across the dust-collecting device. Tables 9 and 10 also give comparison with conventional method. Table 10 shows that the high temperature apparatus for collecting an exhaust gas dust according to the present invention gives high dust collection efficiency and significant reduction in the pressure drop compared with the conventional method.

**Table 8**

| Kind of gas | Electric furnace exhaust gas |
|---|---|
| Gas flow rate | 3,000 Nm³/h |
| Gas temperature | 250°C |
| Gas composition | CO₂ : 30%, CO : 20%, O₂ : 10%, N₂ : 40% |
| Dust content | 15g / Nm³ |
| Dust particle size | -10µm : 90% |

**Table 9**

| | Example (according to the EMBODIMENT 3) | Comparative Example |
|---|---|---|
| Duct inner size | 2 m in width x 3 m in height | same as left |
| Packed bed | 50 mm in thickness x 3 layers | 1,000 mm in thickness x 1 layer |
| Kind of filtration particles | Ceramics ball | same as left |
| Size of filtration particles | 1st layer (upstream side) : 10 mm | 5 mm |
| | 2nd layer (middle stream) : 5 mm | |
| | 3rd layer (downstream side) : 2.5 mm | |
| Discharge rate of filtration particles | 1st layer : 400 kg/h | 2,500 kg/h |
| | 2nd layer : 300 kg/h | |
| | 3rd layer : 200 kg/h | |

**Table 10**

| | Example (according to the EMBODIMENT 3) | Comparative Example |
|---|---|---|
| Dust content at exit | 0.03 g/Nm³ | 0.06 g/Nm³ |
| Dust collection efficiency | 99.8 % | 99.6 % |
| Pressure drop | 15 mmAq | 150 mmAq |

As described above, according to the present invention, the high temperature apparatus for collecting an exhaust gas dust using solid particles as the filtration medium in packed bed state, giving a plurality of boundary planes where the frequency of inertial collisions of dust in the exhaust gas against the filtration medium discontinuously increases to decrease the thickness of individual baked bed, thus achieving high dust collection efficiency and low pressure drop with compact design.

### EMBODIMENT 4

### EMBODIMENT 1

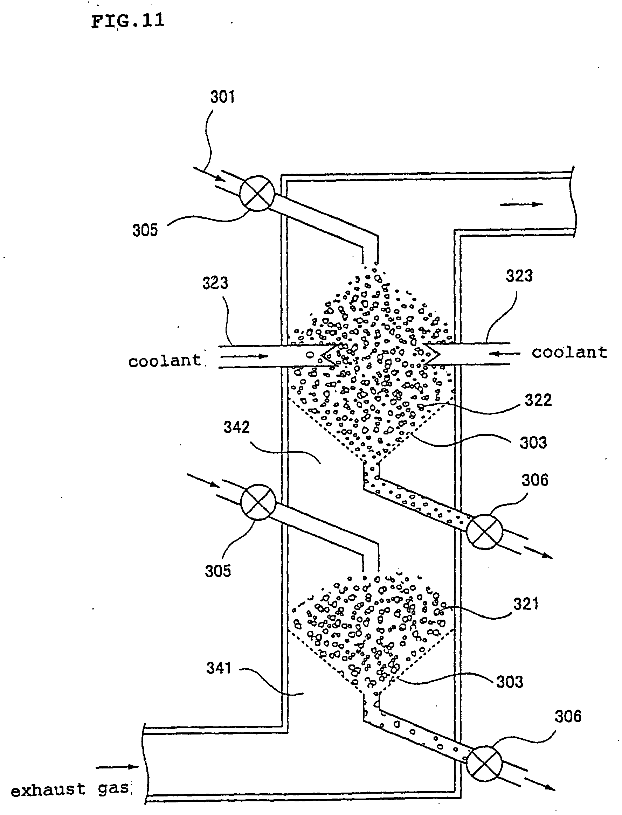

Fig. 11 shows an example of high temperature exhaust gas dust collection unit according to the EMBODIMENT 1 of the EMBODIMENT 4, giving a schematic cross sectional view of counter-flow moving filter bed using solid particles as the filtration medium. According to the EMBODIMENT 1, the exhaust gas enters from the lower section of the dust collecting device, passes through the lowermost space 341, then passes through the first thin filter bed 321 loaded with solid particles 301 as the filtration medium, (hereinafter the solid particles as the filtration medium is referred to as the filtration particles), supported on the air-passable support plate 303, succeedingly passes through the intermediate space 342 to enter the upper second thin filter bed 322 which contains filtration particles 301 in a thin layer, and finally leaves the dust collecting device from top thereof. The second filter bed 322 is provided with a cooling tube 323. By discharging a coolant from the cooling tube 323 into the second filter bed 322, the filtration medium is cooled, for example, to around 500°C, thus cooling the exhaust gas passing through the second filter bed 322 to convert the chloride components in the exhaust gas into solid state to collect them.

On the other hand, the filtration particles 301 that form the filtration particle beds 321, 322 are supplied from the filtration particles charge unit 305 located above respective filter beds 321, 322, and are discharged from the filtration particles discharge unit 306 located beneath the respective filtration particle beds 321, 322.

Based on the above-described findings, the EMBODIMENT 1 adopts a plurality of filter beds. With the apparatus given in Fig. 11, the dust in the exhaust gas does not collide against the filtration medium within the spaces 341, 342. Consequently, the frequency of inertial collisions of the dust in the exhaust gas against the filtration medium suddenly increases when the exhaust gas enters the lower first stage of filter bed 321 via the lowermost space 341 and when the exhaust gas enters the upper second stage of filter bed 322 via the intermediate space 342. That is, according to the EMBODIMENT 1, each of the boundary plane between the lowermost stage space 341 and the first stage filter bed 321, and the boundary plane between the intermediate space 342 and the second filter bed 322 is the interface where the frequency of inertial collisions of the dust in exhaust gas against the filtration medium discontinuously increases. As a result, the dust in the exhaust gas is separated from the gas stream and is heavily accumulated in the portion of filter beds 321, 322 directly beneath the boundary plane.

After the dust accumulated in the filter bed becomes a certain quantity, the dust scatters toward downstream side of the filter bed carried by the exhaust gas stream, (the dust collection efficiency decreases). Even under the condition, however, high dust collection efficiency can be maintained by adjusting the residence time of the filtration particles 301 in the filter beds 321, 322 so as the quantity of accumulated dust per unit volume of the filter bed within the filter bed 302 at directly beneath the boundary plane to keep not higher than the saturation point of accumulation thereof. In other words, the filtration particles 301 loaded with the dust are discharged from the filter beds 321, 322 at an adequate rate using the filtration particles discharge unit, and the fresh filtration particles 301 without containing dust are supplied to the filtration particle beds 321, 322 at an adequate rate using the filtration particles charge unit 205, thus attaining high dust collection efficiency.

Since the EMBODIMENT 1 adopts two boundary planes in series, the dust once emitted from the first filter bed 321 can be captured at the boundary plane between the intermediate space 342 and the upper second filter bed 322. As a result, totally high dust collection efficiency is attained. Furthermore, compared with conventional high temperature apparatus for collecting an exhaust gas dust which has a packed bed of solid particles as the filtration medium, the EMBODIMENT 1 applies thin bed height for individual filter beds 321, 322 to give a thin total bed height in the direction of exhaust gas stream. So the pressure drop as the high temperature apparatus for collecting an exhaust gas dust is kept low level.

The EMBODIMENT 1 deals with two boundary planes, each between the space 341 and the filter bed 321 and between the space 342 and the filter bed 322, as the interface where the frequency of inertial collisions of dust in the exhaust gas against the filtration medium discontinuously increases. If, however, the quantity of dust in the exhaust gas is large, and the emissions of dust from the second filter bed 322 cannot be neglected, the particle size of the filtration particles 301 in the second filter bed 322 may be selected to smaller than that in the first filter bed 321, or, adding to the means, the shape of filtration particles may be varied to increase the frequency of inertial collisions of the dust in the exhaust gas against the filtration particles, to further increase the increasing rate of frequency of collisions of dust in the exhaust gas against the boundary plane between the intermediate space 342 and the second filter bed 322, or furthermore, the number of boundary planes where the frequency of collisions of dust in the exhaust gas discontinuously increases may be set to three or more, thus further increasing the total dust collection efficiency to reduce the quantity of discharge of filtration particles.

Since the quantity of dust accumulated in the first filter bed 321 differs from the quantity of dust accumulated in the second filer bed 322 depending on the conditions such as dust particle size distribution and other variables, it is preferable that the residence time of filtration particles in each of the filter beds 321, 322 is adjustable.

The reason of cooling the second filter bed 322 using the cooling tube 323 positioned in the dust collecting device shown in Fig. 11 is given below. According to the EMBODIMENT 1, the first filter bed 321 is not cooled, and the exhaust gas passes through the first filter bed 321, so the internal temperature of the first filter bed 321 becomes the temperature of the exhaust gas, (for example, 1,000°C). As a result, in the first filter bed 321, the dust components which become solid state at 1,000°C, for example SiO₂, Al₂O₃, CaO, MgO, Fe₂O₃, and FeO are collected. Most of the chlorides such as CaCl₂, NaCl, KCl, PbCl₂, and ZnCl₂, which are in gaseous state, however, pass through the first filter bed. Since, however, the chloride components such as CaCl₂, NaCl, KCl, PbCl₂, and ZnCl₂ that passed through the first filter bed 321 are cooled in the second filter bed 322 to about 500°C and are changed to solid state, these chlorides are surely collected in the second filter bed 322. As described above, by differentiating the internal temperature of individual filter beds 321, 322, the gas components each having different boiling point can be separately collected.

### EMBODIMENT 2

The above-given EMBODIMENT 1 described an example of collecting mainly chloride components by cooling the second filter bed 322 to around 500°C. The cooling temperature range, however, aims to liquefy or solidify the chloride components, so the temperature range may be from 800°C to 350°C, preferably from 500°C to 350°C to bring the chlorides to solid state to collect them. Furthermore, third filter bed may be located at downstream side of the second filter bed 322, and the third filter bed may be cooled to 150°C or below to collect NOx, SOx, and the like thereat.

The cooling means according to the present invention is not limited to the above-described installation of cooling pipe 323 and the above-described cooling method, and may be modified to an adequate one at need. Furthermore, the location of the filter bed is not limited to the one given in Fig. 11, and cross-flow or annular cross-flow may be applied.

According to the EMBODIMENT 4 as described above, the adoption of a plurality of filter beds loaded with solid particles as the filtration medium, and the adoption of varied internal temperature of each filter bed responding to the kind of target dust, the following-described effects are attained.
(1) Since the metallic and slag components are collected separately from chlorides, the discharge rate of the filer particles in each filter bed can be independently controlled so as the pressure drop across each filter bed to suppress at or below a certain level. Accordingly, significant economic effect is attained in minimizing the throughput of separation unit for the used filtration particles and in attaining compact design of the transfer unit for the filtration particles.
(2) It becomes possible that the filtration particles after collected dust such as metallic components and slag components are sent to a reactor, without separating the dust from the filtration particles, to recover valuable metals. Furthermore, if coke is used as the filtration particles, the filtration particles can be effectively utilized as an interfurnace reducing material for metals.

## Claims

1. An apparatus for collecting an exhaust gas dust comprising:
an exhaust gas duct, in which an exhaust gas containing dust flows from an upstream side to a downstream side;
at least one piece of support plates located in the exhaust gas duct, positioned at an inclined angle against the flow of the exhaust gas, to pass the exhaust gas; and,
a packed bed of filtration particles located on the support plate, having an upper surface as a free surface formed by the filtration particles.

2. The apparatus according to claim 1, wherein the inclined angle of the support plate comprises a range within from an angle lower by 10 degrees than the dynamic angle of repose of the filtration particles to an angle higher by 10 degrees than the static angle of repose of the filtration particles.

3. The apparatus for collecting an exhaust gas dust comprising:
an exhaust gas duct to flow an exhaust gas containing dust from an upstream side to a downstream side;
at least two pieces of support plates located in the exhaust gas duct with a space between one plate and the other plate, positioned at an inclined angle against the flow of the exhaust gas, to pass the exhaust gas; and,
a packed bed of filtration particles located on the support plate, having an upper surface as a free surface formed by the filtration particles.

4. The apparatus according to claim 3, wherein the particle size of the filtration particles in each of the packed bed, loaded on the respective support plates, decreases gradually in sequence of the support plates along the direction of the exhaust gas flow.

5. The apparatus according to claim 3, wherein the inclined angle of the support plate is in a range within from an angle lower by 10 degrees than the dynamic angle of repose of the filtration particles to an angle higher by 10 degrees than the static angle of repose.

6. An apparatus for collecting an exhaust gas comprising:
a furnace filled with filtration particles to form a particle-packed bed ;
a partition plate through which the exhaust gas passes, the partition plate being located in the furnace filled with filtration particles and contacting with the top of the particle-packed bed;
an exhaust gas duct in which the exhaust gas containing dust passes, the exhaust gas duct having an exhaust gas discharge end of the exhaust gas duct which is connected to a lower side section of the furnace filled with filtration particles; and,
a clean gas duct, in which a clean gas passes after removing the dust from the exhaust gas, and an inlet end of the clean gas duct connecting with an upper side section of the furnace filled with filtration particles.

7. The apparatus according to claim 6, further comprising:
a particle charge pipe penetrating through upper section of the particle-packed bed and connecting with the partition plate in the particle-packed bed to charge the filtration particles to the particle-packed bed; and,
a particles discharge device connected with a lower section of the particle-packed bed to discharge the particles from the particle-packed bed.

8. An apparatus for collecting an exhaust gas dust comprising:
a furnace filled with filtration particles having a particle-packed bed formed by packing filtration particles in the furnace, the furnace having a larger diameter size at an upper section than a diameter size at a lower section ;
an exhaust gas duct, in which the exhaust gas containing dust passes, and an exhaust gas discharge end of the exhaust gas duct being connected with a lower side section of the furnace filled with filtration particles; and,
a clean gas duct through which a clean gas passes after removing the contained dust from the exhaust gas, and an inlet end of the clean gas duct being connected to an upper side section of the furnace filled with filtration particles.

9. The apparatus according to claim 8, further comprising:
a particle charge pipe penetrating through an upper section of the particle-packed bed and connecting with the partition plate in the particle-packed bed to charge the filtration particles to the particle-packed bed; and,
a particle discharge device connected with a lower section of the particle-packed bed to discharge the particles at a specified rate from the particles packed bed.

10. An apparatus for collecting exhaust gas dust comprising:
an exhaust gas duct to flow the exhaust gas containing dust ;
a support plate to support a filtration medium, through which the exhaust gas passes;
a plurality of packed beds to pack the filtration medium, positioned on the support plate, or positioned between respective pair of support plates facing each other, the plurality of packed beds having the plurality of respective interfaces where the frequency of inertial collisions of the dust in the exhaust gas against the filtration medium discontinuously increases; and,
a plurality of spaces existing before the respective packed beds and between respective pair of the packed beds.

11. An apparatus for collecting the exhaust gas dust according to claim 10, further comprising:
a particle charging device, penetrating through the exhaust gas duct to charge the filtration particles to the particle-packed bed; and,
a particle discharging device, connected with the lower section of the support plate to discharge the particles from the particle-packed bed.

12. The apparatus for collecting an exhaust gas dust according to claim 10, wherein the packed bed comprises a counter-flow packed bed.

13. The apparatus for collecting an exhaust gas dust according to claim 10, wherein the packed bed comprises a cross-flow packed bed.

14. The apparatus for collecting an exhaust gas dust according to claim 10, wherein the packed bed comprises an annular cross-flow packed bed.

15. The apparatus for collecting an exhaust gas dust according to claim 10, wherein the plurality of the interface contact with the respective packed beds.

16. The apparatus for collecting an exhaust gas dust according to claim 10, wherein at least one of the plurality of the interface comprises a boundary plane between the packed beds.

17. The apparatus for collecting an exhaust gas dust according to claim 10, wherein the increasing rate of inertial collisions of the dust in the exhaust gas against the filtration medium at the boundary plane at downstream side along the exhaust gas flow within the dust collecting device is almost equal to or higher than the frequency of inertial collisions of the dust in the exhaust gas against the filtration medium at the boundary plane at upstream side along the exhaust gas glow.

18. The apparatus for collecting an exhaust gas dust according to claim 10, wherein the increasing rate of inertial collisions of the dust in the exhaust gas against the filtration medium at the boundary plane is adjusted by particle size and shape of the solid particles as the filtration medium packed in the packed bed at downstream side of the boundary plane along the exhaust gas flow.

19. The apparatus for collecting an exhaust gas dust according to claim 10, wherein the residence time of the filtration particles packed in the packed bed is adjustable separately in each packed bed.

20. The apparatus for collecting an exhaust gas dust according to claim 10, wherein the filtration particles are ceramic ball, alumina ball, iron ore, coal, activated carbon, coke, silica sand, gravel, or cement clinker.

21. The apparatus for collecting an exhaust gas dust according to claim 10, wherein the filtration particles are ceramic ball, alumina ball, iron ore, coal, activated carbon, coke, silica sand, gravel, or cement clinker.

22. The apparatus for collecting an exhaust gas dust according to claim 10, wherein the filtration particles are ceramic ball, alumina ball, iron ore, coal, activated carbon, coke, silica sand, gravel, or cement clinker.

23. The apparatus for collecting an exhaust gas dust according to claim 10, wherein the filtration particles are ceramic ball, alumina ball, iron ore, coal, activated carbon, coke, silica sand, gravel, or cement clinker.

24. The apparatus for collecting an exhaust gas dust according to claim 10, wherein the filtration particles are ceramic ball, alumina ball, iron ore, coal, activated carbon, coke, silica sand, gravel, or cement clinker.

25. The apparatus for collecting an exhaust gas dust according to claim 10, wherein the particle size of the filtration particles is within a range from 0.5mm to 50 mm.

26. The apparatus for collecting an exhaust gas dust according to claim 10. wherein the particle size of the filtration particles is within a range from 0.5mm to 50 mm.

27. The apparatus for collecting an exhaust gas dust according to claim 10, wherein the particle size of the filtration particles is within a range from 0.5mm to 50 mm.

28. The apparatus for collecting an exhaust gas dust according to claim 8, wherein the particle size of the filtration particles is within a range from 0.5mm to 50 mm.

29. The apparatus for collecting an exhaust gas dust according to claim 10, wherein the particle size of the filtration particles is within a range from 0.5mm to 50 mm.

30. The apparatus for collecting an exhaust gas dust according to claim 10, comprising:
an exhaust gas duct through which an exhaust gas containing dust flows;
a plurality of filter beds of filtration particles, located in the exhaust gas duct, arranged at an interval each other, having the plurality of support plates on the respective filter beds for supporting the packed filtration particles; and,
a temperature control means for cooling the filter bed to vary the internal temperature, responding to the characteristics of dust.

31. The apparatus for collecting an exhaust gas dust according to claim 30, wherein components of the exhaust gas dust having different boiling points each other are separately collected in different filter beds.

32. The apparatus for collecting an exhaust gas dust according to claim 30, wherein the first stage filter bed collects the components of metal and slag.

33. The apparatus for collecting an exhaust gas dust according to claim 30, wherein the second stage filter bed collects chlorides.

34. The apparatus for collecting an exhaust gas dust according to claim 30, wherein the temperature control means cools the second filter stage bed to a range within a range from 800°C to 350°C, as internal temperature of the filter bed.
